(19) Europäisches Patentamt
European Patent Office
Office européen des brevets

(11) EP 3 605 490 A1

(12) **EUROPEAN PATENT APPLICATION**
published in accordance with Art. 153(4) EPC

(43) Date of publication:
**05.02.2020 Bulletin 2020/06**

(21) Application number: **18777437.7**

(22) Date of filing: **30.03.2018**

(51) Int Cl.:
**G08G 1/01** *(2006.01)*     **G08G 1/017** *(2006.01)*

(86) International application number:
**PCT/CN2018/081365**

(87) International publication number:
**WO 2018/177421 (04.10.2018 Gazette 2018/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.03.2017 CN 201710200201**

(71) Applicant: **Hangzhou Hikvision Digital Technology Co., Ltd.**
**Hangzhou 310051 (CN)**

(72) Inventors:
• **ZHANG, Xingfeng**
  **Hangzhou**
  **Zhejiang 310051 (CN)**
• **WANG, Hui**
  **Hangzhou**
  **Zhejiang 310051 (CN)**
• **WANG, Long**
  **Hangzhou**
  **Zhejiang 310051 (CN)**

(74) Representative: **BRP Renaud & Partner mbB**
**Rechtsanwälte Patentanwälte**
**Steuerberater**
**Königstraße 28**
**70173 Stuttgart (DE)**

(54) **METHOD AND DEVICE FOR PREDICTING VEHICLE EMERGENCE POINT**

(57)     An embodiment of the present application provides a method and apparatus for predicting a location where a vehicle appears. The method includes: obtaining static attribute information of a target vehicle; determining a vehicle set corresponding to the static attribute information according to passing vehicle record information of the current road checkpoint; determining a first set of numbers of historical passes of the target vehicle from the current road checkpoint to all of adjacent road checkpoints, and determining a second set of numbers of historical passes of each vehicle set from the current road checkpoint to all of the adjacent road checkpoints; determining a passing probability set of the target vehicle from the current road checkpoints; and determining an adjacent road checkpoint corresponding to the maximum passing probability in the passing probability set as the target road checkpoint. The embodiment of the present application can combine the static attribute information with the number of historical passes of the target vehicle to predict the target road checkpoint where the target vehicle appears after passing the current road checkpoint. This improves the accuracy of predicting the target road checkpoint.

obtaining at least one type of target static attribute information of a target vehicle to be predicted — 101

determining, according to passing vehicle record information of a current road checkpoint, at least one vehicle set corresponding to the at least one type of target static attribute information within a preset historical time period — 102

determining a first historical passing number set for the target vehicle from the current road checkpoint to all of adjacent road checkpoints, and determining a second historical passing number set for each vehicle set from the current road checkpoint to all of adjacent road checkpoints — 103

determining a passing probability set of the target vehicle from the current road checkpoint to all of the adjacent road checkpoints according to the first set of numbers of historical passes and the second set of numbers of historical passes — 104

determining an adjacent road checkpoint corresponding to the maximum passing probability in the passing probability set as a target road checkpoint where the target vehicle appears after passing the current road checkpoint — 105

Fig. 1

## Description

The present application claims the priority to a Chinese patent application No. 201710200201.X, filed with the China National Intellectual Property Administration on March 30, 2017 and entitled "A Method and apparatus for predicting a location where a vehicle appears", which is incorporated herein by reference in its entirety.

## Technical Field

The present application relates to the field of intelligent transportation surveillance, and in particular to a method and apparatus for predicting a location where a vehicle appears.

## Background

With the rapid development of the social economy, the number of motor vehicles increases rapidly, which brings enormous challenges to the management of motor vehicles, such as investigating and handling vehicles using fake license plates and vehicles whose license plates are shielded. In recent years, intelligent transportation technology has been considered as an effective method to manage motor vehicles, and has been developed rapidly. Specifically, the intelligent transportation technology can track a target vehicle by predicting a location where the target vehicle appears. In actual scenes, it can be applied to track a suspicious vehicle that may use a fake license plate.

At present, according to passing vehicle record information for road checkpoints, a road checkpoint where a target vehicle will appear after passing the current road checkpoint can be predicted. The passing vehicle record information includes a captured image corresponding to a vehicle passing a road checkpoint. Further, the passing vehicle record information may include at least one type of static attribute information and dynamic vehicle information of the vehicle obtained through analysis based on the captured image. The static attribute information includes a license plate address, a vehicle color, a vehicle brand, and the like. The dynamic vehicle information includes passing time and a passing speed of a vehicle, and the like. In this way, the target vehicle can be identified from captured images saved for the current road checkpoint and each adjacent road checkpoint; and then the number of historical passes of the target vehicle from the current road checkpoint to each adjacent road checkpoint is obtained; and finally a road checkpoint where the target vehicle will appear after passing the current road checkpoint is predicted according to the number of historical passes.

However, since only the number of historical passes which is the valid information about the target vehicle is used, the amount of the valid information is relatively little, and thus a road checkpoint where a vehicle will appear predicted by using the above method is not accurate enough.

## Summary

The purpose of embodiments of the present application is to provide a method and apparatus for predicting a location where a vehicle appears to improve the accuracy of predicting a location where a vehicle appears. The specific technical solutions are as follows.

An embodiment of the present application provides a method for predicting a location where a vehicle appears. The method includes:

obtaining at least one type of target static attribute information of a target vehicle to be predicted;

determining, according to passing vehicle record information of a current road checkpoint, at least one vehicle set corresponding to the at least one type of target static attribute information within a preset historical time period, wherein one type of target static attribute information corresponds to one vehicle set;

determining a first set of numbers of historical passes of the target vehicle, and determining a second set of numbers of historical passes of each vehicle set, wherein the first set of numbers of historical passes comprises the number of historical passes of the target vehicle from the current road checkpoint to each of adjacent road checkpoints, and the second set of numbers of historical passes of one vehicle set comprises the number of historical passes of a vehicle in this vehicle set from the current road checkpoint to each of adjacent road checkpoints, and the adjacent road checkpoints are road checkpoints adjacent to the current road checkpoint;

determining a passing probability set of the target vehicle from the current road checkpoint to all of adjacent road checkpoints according to the first set of numbers of historical passes and the second set of numbers of historical passes of each vehicle set; and

determining an adjacent road checkpoint corresponding to the maximum passing probability in the passing probability set as a target road checkpoint where the target vehicle appears after passing the current road checkpoint.

Optionally, determining a passing probability set of the target vehicle from the current road checkpoint to all of adjacent road checkpoints according to the first set of numbers of historical passes and the second set of numbers of historical passes of each vehicle set includes:

calculating a historical passing probability of the target vehicle from the current road checkpoint to each of adjacent road checkpoints according to the first set of numbers of historical passes, to obtain the first historical passing probability set;

calculating, according to the second set of numbers of historical passes of each vehicle set, a historical passing probability of this vehicle set from the current road checkpoint to each of adjacent road checkpoints, to obtain the second historical passing probability set of this vehicle set; and

determining the passing probability set of the target vehicle from the current road checkpoint to all of the adjacent road checkpoints according to the first historical passing probability set and the second historical passing probability set of each vehicle set.

Optionally, determining a passing probability set of the target vehicle from the current road checkpoint to all of adjacent road checkpoints according to the first historical passing probability set and the second historical passing probability set of each vehicle set includes:
determining the passing probability set of the target vehicle from the current road checkpoint to all of the adjacent road checkpoints according to the first historical passing probability set and the second historical passing probability set of each vehicle set using the following formula:

$$P_j = \frac{S_0^j \times B_0 + \sum_{i=1}^{I} S_i^j \times B_i}{\sum_{i=1}^{I} B_i}$$

wherein, *j* is the *j*-th adjacent road checkpoint of the current road checkpoint; *i* is the *i*-th vehicle set in the at least one vehicle set; *I* is the number of the at least one vehicle set; $P_j$ is a passing probability of the target vehicle from the current road checkpoint to the *j*-th adjacent road checkpoint in the passing probability set of the target vehicle from the current road checkpoint to all of the adjacent road checkpoints; $S_0^j$ is a historical passing probability of the target vehicle from the current road checkpoint to the j-th adjacent road checkpoint in the first historical passing probability set; $S_i^j$ is a historical passing probability of the *i*-th vehicle set from the current road checkpoint to the *j*-th adjacent road checkpoint in the second historical passing probability set of the *i*-th vehicle set; $B_0$ is a preset weight of the target vehicle; and $B_i$ is a preset weight of the *i*-th vehicle set.
Optionally, determining a passing probability set of the target vehicle from the current road checkpoint to all of adjacent road checkpoints according to the first historical passing probability set and the second historical passing probability set of each vehicle set includes:
determining the passing probability set of the target vehicle from the current road checkpoint to all of the adjacent road checkpoints according to the first historical passing probability set and the second historical passing probability set of each vehicle set using the following formula:

$$P_j = \frac{\sum_{i=0}^{I}(S_i^j \times B_i)}{\sum_{i=0}^{I} B_i}$$

wherein, $I$ is the sum of the number of the at least one vehicle set and the number of the target vehicle; $j$ is the $j$-th adjacent road checkpoint of the current road checkpoint; $P_j$ is a passing probability of the target vehicle from the current road checkpoint to the $j$-th adjacent road checkpoint in the passing probability set of the target vehicle from the current road checkpoint to all of the adjacent road checkpoints; when $i=0$, $i$ is the target vehicle, $S_i$ is a historical passing probability of the target vehicle from the current road checkpoint to the $j$-th adjacent road checkpoint in the first historical passing probability set, and $B_i$ is a preset weight of the target vehicle; when $i \neq 0$, $i$ is the $i$-th vehicle set in the at least one vehicle set, $S_i$ is a historical passing probability of the $i$-th vehicle set from the current road checkpoint to the $j$-th adjacent road checkpoint in the second historical passing probability set of the $i$-th vehicle set, and $B_i$ is a preset weight of the $i$-th vehicle set.

Optionally, determining a second set of numbers of historical passes of each vehicle set includes:
Determining, for each vehicle set, the second set of numbers of historical passes of this vehicle set as follows:

determining the numbers of historical passes of all of vehicles in this vehicle set from the current road checkpoint to all of the adjacent road checkpoints;

for each of the adjacent road checkpoints, averaging the numbers of historical passes of all of the vehicles in this vehicle set from the current road checkpoint to this adjacent road checkpoint, to obtain an average value corresponding to this adjacent road checkpoint; and

determining a set consisting of average values corresponding to all of the adjacent road checkpoints as the second set of numbers of historical passes of this vehicle set from the current road checkpoint to all of the adjacent road checkpoints.

Optionally, the method further includes:

after determining an adjacent road checkpoint corresponding to the maximum passing probability in the passing probability set as a target road checkpoint where the target vehicle appears after passing the current road checkpoint, predicting a time duration required by the target vehicle from the current road checkpoint to the target road checkpoint according to a preset distance between the current road checkpoint and the target road checkpoint and a passing speed of the target vehicle passing the current road checkpoint; and

determining a time obtained by adding the time duration to the passing time of the target vehicle passing the current road checkpoint as a predicted time at which the target vehicle appears at the target road checkpoint, wherein the passing time of the target vehicle is obtained from the passing vehicle record information of the current road checkpoint.

Optionally, the method further includes:

obtaining a historical passing time of the target vehicle passing the current road checkpoint from the passing vehicle record information of the current road checkpoint;

obtaining, from the passing vehicle record information of the target road checkpoint, a historical passing time of the target vehicle passing the target road checkpoint corresponding to the historical passing time of the current road checkpoint;

determining a time difference between the historical passing time of the current road checkpoint and the historical passing time of the target road checkpoint corresponding to the historical passing time of the current road checkpoint;

performing an average calculation on the time difference determined, and determining an average value of the time difference as a historical time duration between the current road checkpoint and the target road checkpoint; and

determining a time obtained by adding the historical time duration to the passing time of the target vehicle passing the current road checkpoint as the predicted time at which the target vehicle appears at the target road checkpoint.

Optionally, the method further includes:

after determining the predicted time at which the target vehicle appears at the target road checkpoint, determining whether the predicted time is a preset destination time;

if not, putting the target road checkpoint into a track set corresponding to the target vehicle as an intermediate road checkpoint, and sending the track set corresponding to the target vehicle to the target road checkpoint, wherein a predicted road checkpoint where the target vehicle will appear after passing each road checkpoint is recorded in the track set corresponding to the target vehicle; and

if yes, putting the target road checkpoint into the track set corresponding to the target vehicle as a destination road checkpoint, and generating a predicted driving track of the target vehicle according to all of road checkpoints in the track set corresponding to the target vehicle.

An embodiment of the present application further provides an apparatus for predicting a location where a vehicle appears. The apparatus includes:

a first obtaining unit, configured for obtaining at least one type of target static attribute information of a target vehicle to be predicted;

a first determination unit, configured for determining, according to passing vehicle record information of a current road checkpoint, at least one vehicle set corresponding to the at least one type of target static attribute information within a preset historical time period, wherein one type of target static attribute information corresponds to one vehicle set;

a second determination unit, configured for determining a first set of numbers of historical passes of the target vehicle, and determining a second set of numbers of historical passes of each vehicle set, wherein the first set of numbers of historical passes comprises the number of historical passes of the target vehicle from the current road checkpoint to each of adjacent road checkpoints, and the second set of numbers of historical passes of one vehicle set comprises the number of historical passes of a vehicle in this vehicle set from the current road checkpoint to each of adjacent road checkpoints, and the adjacent road checkpoints are road checkpoints adjacent to the current road checkpoint;

a third determination unit, configured for determining a passing probability set of the target vehicle from the current road checkpoint to all of adjacent road checkpoints according to the first set of numbers of historical passes and the second set of numbers of historical passes of each vehicle set; and

a fourth determination unit, configured for determining an adjacent road checkpoint corresponding to the maximum passing probability in the passing probability set as a target road checkpoint where the target vehicle appears after passing the current road checkpoint.

Optionally, the third determination unit includes: a first calculation subunit, a second calculation subunit, and a third calculation subunit, wherein
the first calculation subunit is configured for calculating a historical passing probability of the target vehicle from the current road checkpoint to each of adjacent road checkpoints according to the first set of numbers of historical passes, to obtain the first historical passing probability set; and
the second calculation subunit is configured for calculating, according to the second set of numbers of historical passes of each vehicle set, a historical passing probability of this vehicle set from the current road checkpoint to each of adjacent road checkpoints, to obtain the second historical passing probability set of this vehicle set; and
the third calculation subunit is configured for determining the passing probability set of the target vehicle from the current road checkpoint to all of the adjacent road checkpoints according to the first historical passing probability set and the second historical passing probability set of each vehicle set.
Optionally, the third calculation subunit is further configured for determining the passing probability set of the target vehicle from the current road checkpoint to all of the adjacent road checkpoints according to the first historical passing probability set and the second historical passing probability set of each vehicle set using the following formula:

$$ P_j = \frac{S_0^j \times B_0 + \sum_{i=1}^{I} S_i^j \times B_i}{\sum_{i=1}^{I} B_i} $$

wherein, $j$ is the $j$-th adjacent road checkpoint of the current road checkpoint; $i$ is the $i$-th vehicle set in the at least one vehicle set; $I$ is the number of the at least one vehicle set; $P_j$ is a passing probability of the target vehicle from the current road checkpoint to the $j$-th adjacent road checkpoint in the passing probability set of the target vehicle from the current road checkpoint to all of the adjacent road checkpoints; $S_0^j$ is a historical passing probability of the target vehicle from the current road checkpoint to the $j$-th adjacent road checkpoint in the first historical passing probability set; $S_i^j$ is a historical passing probability of the $i$-th vehicle set from the current road checkpoint to the $j$-th adjacent road checkpoint in the second historical passing probability set of the $i$-th vehicle set; $B_0$ is a preset weight of the target vehicle; and $B_i$ is a preset weight of the $i$-th vehicle set.

Optionally, the third calculation subunit is further configured for determining the passing probability set of the target vehicle from the current road checkpoint to all of the adjacent road checkpoints according to the first historical passing probability set and the second historical passing probability set of each vehicle set using the following formula:

$$ P_j = \frac{\sum_{i=0}^{I} (S_i^j \times B_i)}{\sum_{i=0}^{I} B_i} $$

wherein, $I$ is the sum of the number of the at least one vehicle set and the number of the target vehicle; $j$ is the $j$-th adjacent road checkpoint of the current road checkpoint; $P_j$ is a passing probability of the target vehicle from the current road checkpoint to the $j$-th adjacent road checkpoint in the passing probability set of the target vehicle from the current road checkpoint to all of the adjacent road checkpoints; when $i=0$, $i$ is the target vehicle, $S_i$ is a historical passing probability of the target vehicle from the current road checkpoint to the $j$-th adjacent road checkpoint in the first historical passing probability set, and $B_i$ is a preset weight of the target vehicle; when $i\neq0$, $i$ is the $i$-th vehicle set in the at least one vehicle set, $S_i$ is a historical passing probability of the $i$-th vehicle set from the current road checkpoint to the $j$-th adjacent road checkpoint in the second historical passing probability set of the $i$-th vehicle set, and $B_i$ is a preset weight of the $i$-th vehicle set.

Optionally, the second determination unit is further configured for determining, for each vehicle set, a second set of numbers of historical passes of this vehicle set, and comprises: a first determination subunit, an averaging subunit, and a second determination subunit, wherein
the first determination subunit is configured for determining the numbers of historical passes of all of vehicles in this vehicle set from the current road checkpoint to all of the adjacent road checkpoints;
the averaging subunit is configured for, for each of the adjacent road checkpoints, averaging the numbers of historical passes of all of the vehicles in this vehicle set from the current road checkpoint to this adjacent road checkpoint, to obtain an average value corresponding to this adjacent road checkpoint; and
the second determination subunit is configured for determining a set consisting of average values corresponding to all of the adjacent road checkpoints as the second set of numbers of historical passes of this vehicle set from the current road checkpoint to all of the adjacent road checkpoints.

Optionally, the apparatus further includes:

a prediction unit, configured for, after the fourth determination unit determines an adjacent road checkpoint corresponding to the maximum passing probability in the passing probability set as a target road checkpoint where the target vehicle appears after passing the current road checkpoint, predicting a time duration required by the target vehicle from the current road checkpoint to the target road checkpoint according to a preset distance between the current road checkpoint and the target road checkpoint and a passing speed of the target vehicle passing the current road checkpoint; and

a fifth determination unit, configured for determining a time obtained by adding the time duration to the passing time of the target vehicle passing the current road checkpoint as a predicted time at which the target vehicle appears at the target road checkpoint, wherein the passing time of the target vehicle is obtained from the passing vehicle record information of the current road checkpoint.

Optionally, the apparatus further includes:

a second obtaining unit, configured for obtaining a historical passing time of the target vehicle passing the current road checkpoint from the passing vehicle record information of the current road checkpoint;

a sixth determination unit, configured for determining, from the passing vehicle record information of the target road checkpoint, a historical passing time of the target vehicle passing the target road checkpoint corresponding to the historical passing time of the current road checkpoint; and determining a time difference between the historical passing time of the current road checkpoint and the historical passing time of the target road checkpoint corresponding to the historical passing time of the current road checkpoint;

a calculation unit, configured for performing an average calculation on the time difference determined, and determining an average value of the time difference as a historical time duration between the current road checkpoint and the target road checkpoint; and

a first generation unit, configured for determining a time obtained by adding the historical time duration to the passing time of the target vehicle passing the current road checkpoint as the predicted time at which the target vehicle appears at the target road checkpoint.

Optionally, the apparatus further includes:

a determination unit, configured for, after determining the predicted time at which the target vehicle appears at the target road checkpoint, determining whether the predicted time is a preset destination time;

a sending unit, configured for, if the predicted time is not the preset destination time, putting the target road checkpoint into a track set corresponding to the target vehicle as an intermediate road checkpoint, and sending the track set corresponding to the target vehicle to the target road checkpoint, wherein a predicted road checkpoint where the target vehicle will appear after passing each road checkpoint is recorded in the track set corresponding to the target vehicle; and

a second generation unit, configured for, if the predicted time is the preset destination time, putting the target road checkpoint into the track set corresponding to the target vehicle as a destination road checkpoint, and generating a predicted driving track of the target vehicle according to all of road checkpoints in the track set corresponding to the target vehicle.

An embodiment of the present application further provides an electronic device including a processor and a memory, wherein the memory is configured for storing a computer program, and the processor is configured for executing the computer program stored in the memory to implement the method for predicting a location where a vehicle appears provided in any one of the above embodiments.

An embodiment of the present application further provides a machine readable storage medium storing a computer program, wherein the computer program is configured for implementing the method for predicting a location where a vehicle appears provided in any one of the above embodiments when being executed by a processor.

An embodiment of the present application further provides a computer program, which is configured for implementing the method for predicting a location where a vehicle appears provided in any one of the above embodiments when being executed by a processor.

In this way, the static attribute information of a target vehicle is combined with the number of historical passes of the target vehicle to predict the target road checkpoint where the target vehicle appears after passing the current road checkpoint. That is, the effective information related to the target vehicle is added when predicting the location where the target vehicle appears. In this way, the accuracy of predicting the target road checkpoint where the target vehicle appears increases.

**Brief Description of the Drawings**

In order to more clearly describe the technical solutions in the embodiments of the present application and in the prior art, drawings that need to be used in embodiments and the prior art will be briefly described below. Obviously, the drawings provided below are for only some embodiments of the present application; those skilled in the art can also obtain other drawings based on these drawings without any creative efforts.

FIG. 1 is a flowchart of the method for predicting a location where a vehicle appears in the embodiment of the present application;

FIG. 2 is a specific flowchart of step 104 in the embodiment shown in FIG. 1;

FIG. 3 is a partial flowchart of predicting the time at which a target vehicle appears at a target road checkpoint in an embodiment of the present application;

FIG. 4 is another partial flowchart of predicting the time at which a target vehicle appears at a target road checkpoint in an embodiment of the present application;

FIG. 5 is a partial flowchart of predicting a driving track of a target vehicle in an embodiment of the present application;

FIG. 6 is a schematic diagram of a driving track of a target vehicle in an embodiment of the present application;

FIG. 7 is a structural diagram of an apparatus for predicting a location where a vehicle appears in an embodiment of the present application.

**Detailed Description**

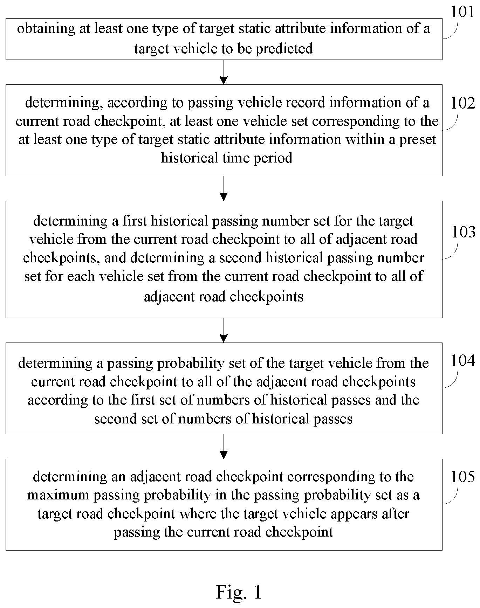

The technical solutions of the present application will be described clearly and completely below with reference to the appended drawings of embodiments herein. Obviously, the described embodiments are only some, and not all, of the embodiments of the present application. All other embodiments obtained based on the embodiments of the present application by those skilled in the art without any creative efforts fall into the scope of protection of the present application.
An embodiment of the present application discloses a method for predicting a location where a vehicle appears.
In the embodiment of the present application, a function software for implementing a method for predicting a location where a vehicle appears may be run in a camera at any road checkpoint, or may be run in a control device associated with a camera at any road checkpoint. The control device is a key device at the road checkpoint, and is mainly used for processing various types of data for the road checkpoint, and realizing data interaction between road checkpoints.
Referring to FIG. 1, FIG. 1 is a flowchart of the method for predicting a location where a vehicle appears according to the embodiment of the present application, wherein the method includes following steps.
Step 101: obtaining at least one type of target static attribute information of a target vehicle.
In an implementation, passing vehicle record information of a road checkpoint may include a captured image corresponding to a vehicle passing the road checkpoint, dynamic vehicle information, and static attribute information of a vehicle obtained by analyzing the captured image, wherein the dynamic vehicle information may include the passing time and passing speed of a vehicle, and the like.
In this step, the target static attribute information may include at least one of a license plate address of a target vehicle, a color of a vehicle body of a target vehicle, and a vehicle brand of a target vehicle, which is of course not limited thereto.
The license plate address may be a municipality or a province to which the license plate number belongs, such as Beijing, Shanghai or Zhejiang Province. The color of the vehicle body may be white, red or black. The vehicle brand may be the brand of a vehicle manufacturer, such as Volkswagen, Ford, BMW, or the like.
Taking the target static attribute information including the license plate address, the color of the vehicle body and the vehicle brand as an example, the target static attribute information of a target vehicle may include: Shanghai, white, and Volkswagen.
In the embodiment of the present application, specific contents contained in the target static attribute information may also be changed according to actual needs. For example, the target static attribute information may further include a length of a vehicle body of a vehicle, whether a vehicle is configured with a sunroof, and the like. The specific contents contained in the target static attribute information is not limited in the present application.

In the embodiment of the present application, the step 101 may be triggered when the camera installed at the current road checkpoint captures an image including the target vehicle, or when the target static attribute information of the target vehicle and the dynamic vehicle information of the current road checkpoint are input into the passing vehicle record information or into the vehicle information base of the current road checkpoint, which is of course not limited thereto.

Step 102: determining, according to passing vehicle record information of the current road checkpoint, at least one vehicle set corresponding to the at least one type of target static attribute information within a preset historical time period.

One type of target static attribute information corresponds to one vehicle set. That is, vehicles having the same target static attribute information constitutes a vehicle set.

In this step, according to passing vehicle record information of the current road checkpoint and the target static attribute information of the target vehicle, a vehicle set corresponding to the target static attribute information may be determined.

For example, when the target static attribute information of the target vehicle includes the license plate address "Shanghai" of the target vehicle, the color "white" of the vehicle body of the target vehicle, and the vehicle brand "Volkswagen" of the target vehicle, according to the passing vehicle record information of the current road checkpoint, multiple vehicles with the same license plate address "Shanghai" are selected as a vehicle set, multiple vehicles whose vehicles bodies have the same color "white" are selected as a vehicle set, and multiple vehicles with the same vehicle brand "Volkswagen" are selected as a vehicle set. As can be seen, the finally obtained vehicle sets corresponding to the target static attribute information include three vehicle sets. It can be understood that one type of target static attribute information only corresponds to one vehicle set.

In order to make the vehicle set closer to the target vehicle and narrow the size of the vehicle set, a historical time period may be determined according to the passing time of the target vehicle passing the current road checkpoint, and a vehicle set in this historical time period is selected as the basis for predicting a target road checkpoint where the target vehicle will appear after passing the current road checkpoint.

Here, the historical time period may be a period of time before and after a passing time in a year prior to a year in which the passing time of the target vehicle passing the current road checkpoint is.

For example, the historical time period may be a period of time of 48 hours before and after a passing time in a year prior to a year in which the passing time of the target vehicle passing the current road checkpoint is. If the target passing time of the target vehicle is 15:00 on January 3, 2017, the corresponding historical time period may be from 15:00 on January 1, 2016 to 15:00 on January 5, 2016. Then, passing vehicle record information within this time period from 15:00 on January 1, 2016 to 15:00 on January 5, 2016 may be obtained from the passing vehicle record information of the current road checkpoint, and a vehicle set corresponding to the target static attribute information is determined according to the passing vehicle record information within this time period.

The above historical time period may also be a period of time before the passing time of the target vehicle passing the current road checkpoint. For example, the above historical time period may also be a period of time of 48 hours before the passing time of the target vehicle passing the current road checkpoint. If the target passing time of the target vehicle is 15:00 on January 3, 2017, the corresponding historical time period may be from 15:00 on January 1, 2017 to 15:00 on January 3, 2017.

Of course, the historical time period may also be determined according to actual needs. A specific method for determining the historical time period is not limited in this application.

Step 103: determining a first set of numbers of historical passes corresponding to the target vehicle from the current road checkpoint to all of adjacent road checkpoints, and determining a second set of numbers of historical passes corresponding to each vehicle set from the current road checkpoint to all of the adjacent road checkpoints.

Step 103 is to determine a first set of numbers of historical passes of the target vehicle, and to determine a second set of numbers of historical passes of each vehicle set. The first set of numbers of historical passes includes the number of historical passes of the target vehicle from the current road checkpoint to each adjacent road checkpoint, and the second set of numbers of historical passes of one vehicle set includes the number of historical passes of a vehicle in this vehicle set from the current road checkpoint to each adjacent road checkpoint. The adjacent road checkpoint is a road checkpoint adjacent to the current road checkpoint.

In this step, passing vehicle record information of a road checkpoint includes a captured image and the dynamic vehicle information corresponding to a vehicle passing the road checkpoint, and the static attribute information of the vehicle obtained by analyzing the captured image, wherein the static attribute information of the vehicle may further include a license plate number of the vehicle. Therefore, according to the passing vehicle record information of the current road checkpoint and the passing vehicle record information of each adjacent road checkpoint, the first set of numbers of historical passes of the target vehicle from the current road checkpoint to all of adjacent road checkpoints may be obtained based on the license plate number of the target vehicle, and the second set of numbers of historical passes of each vehicle set from the current road checkpoint to all of adjacent road checkpoints is obtained based on at least one vehicle set obtained in step 102.

Optionally, in an implementation, determining a second set of numbers of historical passes of each vehicle set may specifically include:

Determining, for each vehicle set, the second set of numbers of historical passes of this vehicle set as follows:

determining the numbers of historical passes of all of vehicles in this vehicle set from the current road checkpoint to all of adjacent road checkpoints;

for each adjacent road checkpoint, averaging the numbers of historical passes of vehicles in this vehicle set from the current road checkpoint to this adjacent road checkpoint, to obtain an average value corresponding to this adjacent road checkpoint; and

determining a set consisting of average values corresponding to all of adjacent road checkpoints as the second set of numbers of historical passes of this vehicle set from the current road checkpoint to all of the adjacent road checkpoints.

In the embodiment of the present application, since one vehicle set includes a plurality of vehicles, it is necessary to first calculate the number of historical passes of each vehicle in the vehicle set from the current road checkpoint to a same adjacent road checkpoint; then an average value of numbers of historical passes of all vehicles in the vehicle set from the current road checkpoint to the same adjacent road checkpoint is obtained. It can be understood that for a vehicle set, one adjacent road checkpoint corresponds to one average value of numbers of historical passes. Finally, a set consisting of average values of numbers of historical passes corresponding to all of adjacent road checkpoints is used as the second set of numbers of historical passes of this vehicle set from the current road checkpoint to all of adjacent road checkpoints. It can be understood that, the second sets of numbers of historical passes of all vehicle sets from the current road checkpoint to all of adjacent road checkpoints can be calculated according to the same method.

For easy understanding, the second set of numbers of historical passes is illustrated below, for example.

A captured image of a target vehicle is captured at a road checkpoint at 9:00 am on January 19, 2017, and by analyzing the captured image of the target vehicle, it can be obtained that the license plate number of the target vehicle is "沪 A88888" (i.e., the license plate address is Shanghai), the color of the vehicle body is white, and the vehicle brand is Volkswagen. At the same time, road checkpoints adjacent to the current road checkpoint are a road checkpoint A and a road checkpoint B. According to the vehicle information within a historical time period from 9:00 am on January 19, 2016 to 9:00 am on January 21, 2016 in the vehicle information base, it can be obtained that a first vehicle set with the same license plate address "Shanghai" includes 2 vehicles, a second vehicle set with the same vehicle brand "Volkswagen" includes 3 vehicles, and a third vehicle set with the same color of the vehicle body "white" includes 4 vehicles.

The numbers of historical passes of the two vehicles in the first vehicle set from the current road checkpoint to the road checkpoint A is 5 and 7 respectively, and the numbers of historical passes of the two vehicles from the current road checkpoint to the road checkpoint B is 3 and 5 respectively. Then, for the road checkpoint A, the average value of the numbers of historical passes of the first vehicle set is (5+7)/2=6. For the road checkpoint B, the average value of the numbers of historical passes of the first vehicle set is (3+5)/2=4. The second set of numbers of historical passes of the first vehicle set is {6, 4}.

Similarly, the numbers of historical passes of the three vehicles in the second vehicle set from the current road checkpoint to the road checkpoint A is 1, 2 and 3 respectively, and the numbers of historical passes of the three vehicles from the current road checkpoint to the road checkpoint B is 4, 5 and 6 respectively. Then, for the road checkpoint A, the average value of the numbers of historical passes of the second vehicle set is (1+2+3)/3=2. For the road checkpoint B, the average value of the numbers of historical passes of the second vehicle set is (4+5+6)/3=5. The second set of numbers of historical passes of the second vehicle set is {2, 5}.

The numbers of historical passes of the four vehicles in the third vehicle set from the current road checkpoint to the road checkpoint A is 6, 7, 9 and 10 respectively, and the numbers of historical passes from the current road checkpoint to the road checkpoint B is 5, 6, 7 and 8 respectively. Then, for the road checkpoint A, the average value of the numbers of historical passes of the third vehicle set is (6+7+9+10)/4=8. For the road checkpoint B, the average value of the numbers of historical passes of the third vehicle set is (4+5+7+8)/4=6. The second set of numbers of historical passes corresponding to the second vehicle set is {8, 6}.

In this way, according to the target static attribute information and the number of historical passes of the target vehicle, the first set of numbers of historical passes of the target vehicle and the second set of numbers of historical passes of each vehicle set corresponding to the target static attribute information can be obtained.

Step 104: determining a passing probability set for the target vehicle from the current road checkpoint to all of the adjacent road checkpoints according to the first set of numbers of historical passes and second set of numbers of historical passes.

Step 104 is to determine a passing probability set of the target vehicle from the current road checkpoint to all of the adjacent road checkpoints according to the first set of numbers of historical passes and the second set of numbers of historical passes of each vehicle set.

The passing probability set of the target vehicle includes a passing probability of the target vehicle from the current road checkpoint to each adjacent road checkpoint.

In this step, the passing probability set of the target vehicle from the current road checkpoint to all of the adjacent road checkpoints can be determined according to the first set of numbers of historical passes of the target vehicle and the second set of numbers of historical passes of each vehicle set.

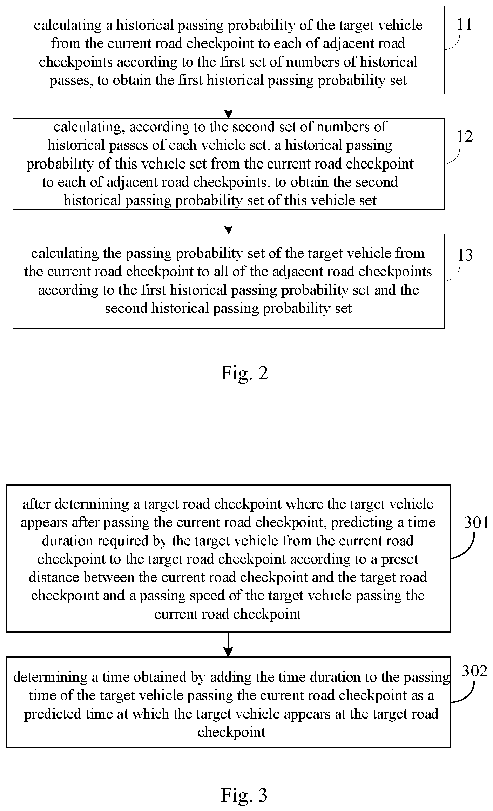

Optionally, in a specific implementation, referring to FIG. 2 that is a specific flowchart of step 104 in the embodiment shown in FIG. 1, step 104 may specifically include:

Sub-step 11: calculating a first historical passing probability set of the target vehicle from the current road checkpoint to all of the adjacent road checkpoints according to the first set of numbers of historical passes.

The sub-step 11 is to calculate a historical passing probability of the target vehicle from the current road checkpoint to each adjacent road checkpoint according to the first set of numbers of historical passes, to obtain a first historical passing probability set. The first historical passing probability set includes a historical passing probability of the target vehicle from the current road checkpoint to each adjacent road checkpoint respectively.

Sub-step 12: calculating a second historical passing probability set corresponding to each vehicle set from the current road checkpoint to all of the adjacent road checkpoints according to the second set of numbers of historical passes.

The sub-step 12 is to calculate, according to the second set of numbers of historical passes of each vehicle set, a historical passing probability of the vehicle set from the current road checkpoint to each adjacent road checkpoint, to obtain the second historical passing probability set of the vehicle set. The second historical passing probability set of a vehicle set includes a historical passing probability of this vehicle set from the current road checkpoint to each adjacent road checkpoint.

For easy understanding, on the basis of the example shown in step 103, the calculation process of the first historical passing probability set and the second historical passing probability set will be described.

According to the vehicle information within a historical time period from 9:00 am on January 17, 2016 to 9:00 am on January 21, 2016 in a vehicle information base, it can be obtained that the number of historical passes of the target vehicle from the current road checkpoint to the road checkpoint A is 3, and the number of historical passes of the target vehicle from the current road checkpoint to the road checkpoint B is 5. That is, the first set of numbers of historical passes of the target vehicle is {3, 5}. Then, it can be obtained, through calculation, that the historical passing probability of the target vehicle from the current road checkpoint to the road checkpoint A is 3/(3+5)=37.5%, and the historical passing probability of the target vehicle from the current road checkpoint to the road checkpoint B is 5/(3+5) = 62.5%.

Similarly, it has been obtained that the second set of numbers of historical passes of the first vehicle set in which vehicles have the same license plate address "Shanghai" is {6, 4}. Therefore, it can be obtained, through calculation, that the historical passing probability of the first vehicle set from the current road checkpoint to the road checkpoint A is 6/(6+4)=60%, and the historical passing probability of the first vehicle set from the current road checkpoint to the road checkpoint B is 4/(6+4)=40%.

It has been obtained that the second set of numbers of historical passes of the second vehicle set in which vehicles have the same vehicle brand "Volkswagen" is {2, 5}. Therefore, it can be obtained, through calculation, that the historical passing probability of the second vehicle set from the current road checkpoint to the road checkpoint A is 2/(2+5)=28.6%, and the historical passing probability of the second vehicle set from the current road checkpoint to the road checkpoint B is 5/(2+5)=71.4%.

It has been obtained that the second set of numbers of historical passes of the third vehicle set in which vehicle bodies of vehicles have the same color "white" is {8, 6}. Therefore, it can be obtained, through calculation, that the historical passing probability of the third vehicle set from the current road checkpoint to the road checkpoint A is 8/(8+6)=57.1%, and the historical passing probability of the third vehicle set from the current road checkpoint to the road checkpoint B is 6/(8+6)=42.9%.

It can be known that the first historical passing probability set of the target vehicle from the current road checkpoint to all of the adjacent road checkpoints is {37.5%, 62.5%}. The second historical passing probability sets of all of vehicle sets from the current road checkpoint to all of the adjacent road checkpoints are {60%, 40%}, {28.6%, 71.4%}, {57.1%, 42.9%}, respectively.

The second historical passing probability set of the first vehicle set from the current road checkpoint to all of the adjacent road checkpoints is {60%, 40%}, and the second historical passing probability set of the second vehicle set from the current road checkpoint to all of the adjacent road checkpoints is {28.6%, 71.4%}, and the second historical passing probability set of the third vehicle set from the current road checkpoint to all of the adjacent road checkpoints is {57.1%, 42.9%}.

Sub-step 13: calculating a passing probability set of the target vehicle from the current road checkpoint to all of the adjacent road checkpoints according to the first historical passing probability set and second historical passing probability set.

The sub-step 13 is to determine a passing probability set of the target vehicle from the current road checkpoint to all of the adjacent road checkpoints according to the first historical passing probability set and the second historical passing probability set of each vehicle set.

In this step, the passing probability set of the target vehicle from the current road checkpoint to all of the adjacent road checkpoints can be predicted according to the first historical passing probability set of the target vehicle and the second historical passing probability set of each vehicle set.

Optionally, in a specific implementation of the present application, the sub-step 13 may specifically include: determining the passing probability set of the target vehicle from the current road checkpoint to all of the adjacent road checkpoints according to the first historical passing probability set and the second historical passing probability set of each vehicle set using the following formula.

$$P_j = \frac{S_0^j \times B_0 + \sum_{i=1}^{I} S_i^j \times B_i}{\sum_{i=1}^{I} B_i} \qquad (1)$$

In formula (1), $j$ is the $j$-th adjacent road checkpoint of the current road checkpoint, $j$ is a positive integer such as 1, 2, 3, etc., and the value range of $j$ is 1-$J$, wherein $J$ is the number of road checkpoints adjacent to the current road checkpoint; $i$ is the $i$-th vehicle set in the at least one vehicle set, $i$ is a positive integer such as 1, 2, 3, etc., and the value range of $i$ is 1-$I$, wherein $I$ is the number of the at least one vehicle set; $P_j$ is a passing probability of the target vehicle from the current road checkpoint to the $j$-th adjacent road checkpoint in the passing probability set of the target vehicle from the current road checkpoint to all of the adjacent road checkpoints; $S_0^j$ is the historical passing probability from the current road checkpoint to the $j$-th adjacent road checkpoint in the first historical passing probability set; $S_i^j$ is the historical passing probability of the $i$-th vehicle set from the current road checkpoint to the $j$-th adjacent road checkpoint in the second historical passing probability set of the $i$-th vehicle set; $B_0$ is a preset weight of the target vehicle; $B_i$ is a preset weight of the $i$-th vehicle set.

Optionally, in a specific implementation of the present application, the sub-step 13 may specifically include: determining a passing probability set of the target vehicle from the current road checkpoint to all of the adjacent road checkpoints according to the first historical passing probability set and the second historical passing probability set of each vehicle set using the following formula.

$$P_j = \frac{\sum_{i=0}^{I} (S_i^j \times B_i^j)}{\sum_{i=0}^{I} B_i} \qquad (2)$$

wherein, $I$ is the sum of the number of the at least one vehicle set and the number of target vehicles; $j$ is the $j$-th adjacent road checkpoint of the current road checkpoint; $P_j$ is a passing probability of the target vehicle from the current road checkpoint to the $j$-th adjacent road checkpoint in the passing probability set of the target vehicle from the current road checkpoint to all of the adjacent road checkpoints; when $i$=0, $i$ is the target vehicle, $S_i$ is the historical passing probability of the target vehicle from the current road checkpoint to the $j$-th adjacent road checkpoint in the first historical passing probability set, and $B_i$ is a preset weight of the target vehicle; when $i$≠0, $i$ is the $i$-th vehicle set in the at least one vehicle set, $S_i$ is the historical passing probability of the $i$-th vehicle set from the current road checkpoint to the $j$-th adjacent road checkpoint in the second historical passing probability set of the $i$-th vehicle set, and $B_i$ is a preset weight of the $i$-th vehicle set.

The specific values of the preset weight $B_0$ of the target vehicle and the weight $B_i$ of the vehicle set can be set according to actual situations. The specific values of the weights are not limited in the embodiment of the present application.

For easy understanding, on the basis of the example shown in sub-step 12, the calculation process of the passing probability set of the target vehicle from the current road checkpoint to all of the adjacent road checkpoints will be described.

It is known that for the road checkpoint A, the historical passing probability of the target vehicle from the current road checkpoint to the road checkpoint A is 37.5%, and the historical passing probability of the first vehicle set from the current road checkpoint to the road checkpoint A is 60 %, the historical passing probability of the second vehicle set from the current road checkpoint to the road checkpoint A is 28.6%, and the historical passing probability of the third vehicle set from the current road checkpoint to the road checkpoint A is 57.1%.

It is known that for the road checkpoint B, the historical passing probability of the target vehicle from the current road checkpoint to the road checkpoint B is 62.5%, and the historical passing probability of the first vehicle set from the current road checkpoint to the road checkpoint B is 40%, the historical passing probability of the second vehicle set from the current road checkpoint to the road checkpoint B is 71.4%, and the historical passing probability of the third vehicle set from the current road checkpoint to the road checkpoint B is 42.9%.

At the same time, the preset weight of the target vehicle is 4, the preset weight of the first vehicle set is 2, the preset weight of the second vehicle set is 2, and the preset weight of the third vehicle set is 1. Then, according to formula (2), the passing probability $P_1$ of the target vehicle from the current road checkpoint to the road checkpoint A can be predicted:

$$P_1 = \frac{37.5\% \times 4 + 60\% \times 2 + 28.6\% \times 2 + 57.1\% \times 1}{4+2+2+1} = 42.7\%$$

the passing probability $P_2$ of the target vehicle from the current road checkpoint to the road checkpoint B:

$$P_2 = \frac{62.5\% \times 4 + 40\% \times 2 + 71.4\% \times 2 + 42.9\% \times 1}{4+2+2+1} = 57.3\%$$

In this way, the passing probability of the target vehicle to each adjacent road checkpoint is calculated.

In FIG. 1, in step 105, an adjacent road checkpoint corresponding to the maximum passing probability in the passing probability set is determined as a target road checkpoint where the target vehicle will appear after passing the current road checkpoint. The target road checkpoint is one of the adjacent road checkpoints.

In this step, an adjacent road checkpoint corresponding to the maximum passing probability in the passing probabilities of the target vehicle to all of the adjacent road checkpoints may be used as the target road checkpoint where the target vehicle will appear after passing the current road checkpoint.

For easy understanding, on the basis of the example shown in sub-step 13, the process of determining the target road checkpoint where the target vehicle will appear after passing the current road checkpoint will be described.

It is known that the passing probability $P_1$ of the target vehicle from the current road checkpoint to the road checkpoint A is 42.7%, and the passing probability $P_2$ of the target vehicle from the current road checkpoint to the road checkpoint B is 57.3%. It can be determined that the passing probability $P_2$ is the maximum passing probability. Thus the road checkpoint B can be determined as the target road checkpoint where the target vehicle will appear after passing the current road checkpoint.

It can be seen that the embodiment of the present application predicts the target road checkpoint where the target vehicle will appear after passing the current road checkpoint by combining target static attribute information of a target vehicle with the number of historical passes in dynamic vehicle information, that is, adding the effective information related to the target vehicle, which increases the accuracy of predicting the target road checkpoint where the target vehicle will appear.

In addition, after predicting the target road checkpoint where the target vehicle will appear, it is also possible to determine a predicted time at which the target vehicle will appear at the target road checkpoint to improve the comprehensiveness of the prediction. Therefore, in addition to the steps of the embodiment shown in Fig. 1, a method for predicting the time at which the target vehicle will appear at the target road checkpoint provided by an embodiment of the present application may include following steps as shown in the partial flowchart of FIG. 3.

At step 301, after a target road checkpoint where the target vehicle will appear after passing the current road checkpoint is predicted, a duration required by the target vehicle from the current road checkpoint to the target road checkpoint is predicted according to a preset distance between the current road checkpoint and the target road checkpoint and a historical passing speed of the target vehicle passing the current road checkpoint.

Step 301 is to, after the step 105, predict a time duration required by the target vehicle from the current road checkpoint to the target road checkpoint according to a preset distance between the current road checkpoint and the target road checkpoint and a passing speed of the target vehicle passing the current road checkpoint.

The target road checkpoint of the target vehicle has been determined, thus the distance between the current road checkpoint and the target road checkpoint, that is, the preset distance, can be determined based on the urban traffic map. Furthermore, the passing speed of the target vehicle passing the current road checkpoint can be obtained from the passing vehicle record information of the current road checkpoint. As such, the predicted time duration required by the target vehicle from the current road checkpoint to the target road checkpoint can be obtained by dividing the preset distance by the passing speed, according to the formula: time=distance/speed.

For example, according to the urban traffic map, the distance between the current road checkpoint and the target road checkpoint is 5 km. Furthermore, it can be obtained from the passing vehicle record information of the current road checkpoint that, the passing speed of the target vehicle passing the current road checkpoint is 50 km/h. Therefore, it can be predicted that the time duration required by the target vehicle from the current road checkpoint to the target road checkpoint is (5 km) / (50 km/h) = 0.1 hour.

At step 302, a predicted time at which the target vehicle will appear at the target road checkpoint is determined by adding the time duration to the passing time of the target vehicle passing the current road checkpoint.

Step 302 is to determine a time obtained by adding the time duration to the passing time of the target vehicle passing the current road checkpoint as the predicted time at which the target vehicle will appear at the target road checkpoint.

The passing time of the target vehicle passing the current road checkpoint can be obtained from the passing vehicle record information of the current road checkpoint.

In this step, the predicted time at which the target vehicle will appear at the target road checkpoint can be determined by adding the predicted time duration required by the target vehicle from the current road checkpoint to the target road checkpoint to the passing time of the target vehicle passing the current road checkpoint.

For example, it is known that the predicted time duration required by the target vehicle from the current road checkpoint to the target road checkpoint is 0.1 hour, that is, 6 minutes, and it is obtained from the passing vehicle record information of the current road checkpoint that the passing time of the target vehicle passing the current road checkpoint is 10:00 am on January 19, 2017. Then, the predicted time at which the target vehicle will appear at the target road checkpoint is 10:06 am on January 19, 2017.

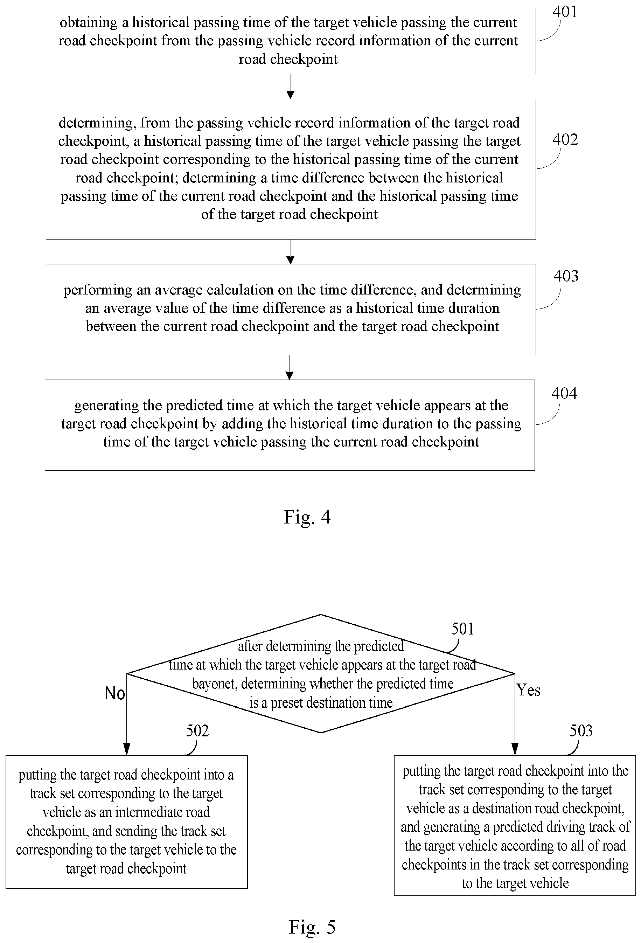

In addition, after the target road checkpoint where the target vehicle will appear is predicted, the embodiment of the present application further provides a method for determining a predicted time at which the target vehicle will appear at the target road checkpoint to improve the comprehensiveness of the prediction. Therefore, in addition to the steps of the embodiment shown in Fig. 1, another method for predicting the time at which the target vehicle will appear at the target road checkpoint provided by the embodiment of the present application may include following steps as shown in the partial flowchart of FIG. 4.

At step 401, a historical passing time of the target vehicle passing the current road checkpoint is obtained from the passing vehicle record information of the current road checkpoint.

Step 401 is to, after the step 105, obtain the historical passing time of the target vehicle passing the current road checkpoint from the passing vehicle record information of the current road checkpoint.

In the embodiment of the present application, at least one historical passing time of the target vehicle passing the current road checkpoint is stored in the passing vehicle record information of the current road checkpoint. The historical passing time does not include the passing time of the target vehicle passing the current road checkpoint mentioned in the above step 302.

At step 402, in the passing vehicle record information of the target road checkpoint, a historical passing time of the target vehicle passing the target road checkpoint, corresponding to the historical passing time of the current road checkpoint is determined; and a time difference between the historical passing time of the current road checkpoint and the historical passing time of the target road checkpoint is determined.

Step 402 is to obtain, from the passing vehicle record information of the target road checkpoint, a historical passing time of the target vehicle passing the target road checkpoint corresponding to the historical passing time of the current road checkpoint. The time difference between the historical passing time of the current road checkpoint and the historical passing time of the target road checkpoint corresponding to the historical passing time of the current road checkpoint is determined.

In this step, a historical passing time of the target vehicle passing the target road checkpoint corresponding to each historical passing time of the current road checkpoint can be determined; and a time difference between each historical passing time of the current road checkpoint and the historical passing time of the target road checkpoint corresponding to this historical passing time of the current road checkpoint can be determined.

For example, the historical passing time of the target vehicle passing the current road checkpoint is 10:00 am on January 19, 2015, 5 pm on December 1, 2016, and 10:00 am on January 19, 2017 respectively, and the corresponding historical passing time of the target vehicle passing the target road checkpoint is 11:00 am on January 19, 2015, 5:40 pm on December 1, 2016, and 10:10 am on January 19, 2017 respectively.

10:00 am on January 19, 2015 corresponds to 11:00 am on January 19, 2015, 5 pm on December 1, 2016 corresponds to 5:40 pm on December 1, 2016, and 10:00 am on January 19, 2017 correspond to 10:10 am on January 19, 2017.

Next, the time differences between the historical passing time of the current road checkpoint and the historical passing time of the target road checkpoint corresponding to the historical passing time of the current road checkpoint can be determined as 60 minutes, 40 minutes and 10 minutes respectively.

At step 403, the time difference is averaged, and an average value of the time difference is determined as a historical time duration between the current road checkpoint and the target road checkpoint.

Step 403 is to average the time difference determined, and determine the average value of the time difference as a historical time duration between the current road checkpoint and the target road checkpoint.

For example, based on the example shown in step 403, it can be determined that the historical time duration between the current road checkpoint and the target road checkpoint is (60 + 40 + 10) / 3 = 36 minutes, 42 seconds.

At step 404, a predicted time at which the target vehicle will appear at the target road checkpoint is generated by adding the historical time duration to the passing time of the target vehicle passing the current road checkpoint.

Step 404 is to determine a time obtained by adding the historical time duration to the passing time of the target vehicle passing the current road checkpoint as the predicted time at which the target vehicle will appear at the target road checkpoint.

For example, it is known that the historical time duration between the current road checkpoint and the target road checkpoint is 36 minutes, 42 seconds, and it is obtained from the passing vehicle record information of the current road checkpoint that the passing time of the target vehicle passing the current road checkpoint is 1 pm on January 19, 2017, thus the predicted time at which the target vehicle will appear at the target road checkpoint is generated as 1:36:42 pm on January 19, 2017.

It can be seen that the embodiment of the present application can predict the time at which the target vehicle appears at the target road checkpoint according to the passing vehicle record information of the current road checkpoint on the premise that the target road checkpoint of the target vehicle has been determined.

In addition, after the predicted time at which the target vehicle will appear at the target road checkpoint is predicted, it is also possible to predict a driving track of the target vehicle to improve the comprehensiveness of the prediction. Therefore, a method for predicting a driving track of the target vehicle provided by the embodiment of the present application may include following steps after the step of obtaining the predicted time at which the target vehicle will appear at the target road checkpoint, as shown in the partial flowchart of FIG. 5.

At step 501, it is determined whether the predicted time is a preset destination time. If not, step 502 is performed. Otherwise, step 503 is performed.

Step 501 is to, after determining the predicted time at which the target vehicle will appear at the target road checkpoint in step 302 or step 404, determine whether the predicted time is a preset destination time. If not, step 502 is performed. Otherwise, step 503 is performed.

In practical applications, a destination time may be determined for the target vehicle according to actual needs, to predict a driving track of the target vehicle before the destination time.

At step 502, if the predicted time is not the preset destination time, the target road checkpoint is putted into a track set corresponding to the target vehicle as an intermediate road checkpoint, and the track set corresponding to the target vehicle is sent to the target road checkpoint.

Step 502 is to, if the predicted time is not the preset destination time, put the target road checkpoint into a track set corresponding to the target vehicle as an intermediate road checkpoint, and send the track set corresponding to the target vehicle to the target road checkpoint.

A predicted road checkpoint, for each road checkpoint, where the target vehicle will appear when this road checkpoint is used as the current road checkpoint is recorded in the track set corresponding to the target vehicle. That is to say, a predicted road checkpoint, for each road checkpoint, where the target vehicle will appear after the target vehicle passes this road checkpoint is recorded in the track set corresponding to the target vehicle.

In this step, the predicted time at which the target vehicle will appear at the target road checkpoint after passing the current road checkpoint is known. If the predicted time is not the preset destination time, the target road checkpoint may be putted into the track set of the target vehicle, and the track set is stored in the passing vehicle record information of the current road checkpoint and sent to the target road checkpoint.

It can be seen that step 502 can be repeatedly performed before the predicted time reaches the destination time, so that all the predicted target road checkpoints corresponding to the target vehicle are saved in the track set before the destination time is reached.

At step 503, if the predicted time is the preset destination time, the target road checkpoint is putted into the track set corresponding to the target vehicle as a destination road checkpoint, and a predicted driving track of the target vehicle is generated according to the all of the road checkpoints in the track set currently corresponding to the target vehicle.

Step 503 is to, if the predicted time is the preset destination time, put the target road checkpoint into the track set corresponding to the target vehicle as a destination road checkpoint, and generate a predicted driving track of the target vehicle according to all of the road checkpoints in the track set corresponding to the target vehicle.

In this step, if the predicted time at which the target vehicle will appear at the target road checkpoint is the preset destination time, the target road checkpoint can be putted into the track set of the target vehicle as a destination road checkpoint, and the driving track of the target vehicle can be predicted according to all of the road checkpoints in the track set of the target vehicle.

In this way, it is possible to generate a predicted driving track of the target vehicle according to all of the target road checkpoints corresponding to the target vehicle predicted before the destination time is reached.

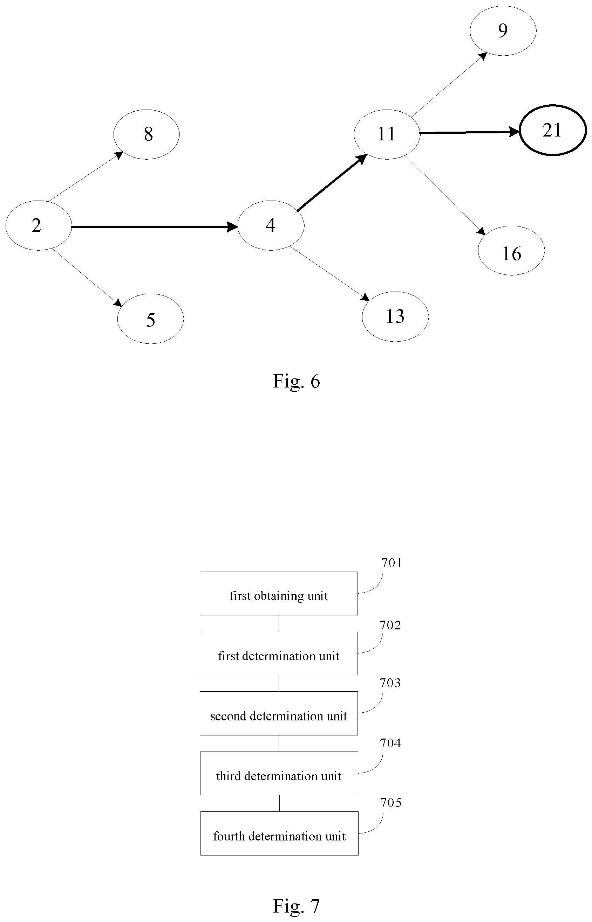

The method for predicting a location where a vehicle appears provided by the embodiment of the present application will be described below with reference to a specific embodiment shown in FIG. 6. In Fig. 6, each ellipse represents a road checkpoint, and the number in the ellipse is the serial number of the road checkpoint.

At the first step, target static attribute information is obtained according to a captured image of a target vehicle, and a historical time period is preset.

Specifically, a camera at the road checkpoint 2 captures an image of a target vehicle with the license plate number "浙 111111" . The target static attribute information of the target vehicle "浙 111111" is obtained by analyzing the captured image of the target vehicle. That is, the license plate address is " Zhejiang", the color of the vehicle body is "red", the length of the vehicle body is "small car", the vehicle brand is "BMW MINI". The capturing time is "2016-02-10 16:25:49". According to the capturing time, the historical time period is preset as [2015-02-08 16:25:49, 2015-02-12 16:25:49].

At the second step, vehicle sets respectively corresponding to the target static attribute information within the historical time period are obtained.

Specifically, the vehicle information within the time period [2015-02-08 16:25:49, 2015-02-12 16:25:49] is obtained from the passing vehicle record information of the road checkpoint 2. From the vehicle information within the time period [2015-02-08 16:25:49, 2015-02-12 16:25:49], vehicle sets corresponding to the target static attribute information are obtained. Vehicles with the same license plate address "Zhejiang" are putted into the vehicle set S1, vehicles whose vehicle bodies have the same color "red" are putted into the vehicle set S2, vehicles whose vehicle bodies have the same length "small car" are putted into the vehicle set S3, and vehicles with the same vehicle brand "BMW MINI" are putted into the vehicle set S4.

At the third step: a first set of numbers of historical passes of the target vehicle from the current road checkpoint to all of the adjacent road checkpoints, and a second set of numbers of historical passes of each vehicle set from the current road checkpoint to all of the adjacent road checkpoints, are determined.

Specifically, it is known that adjacent road checkpoints of the road checkpoint 2 are road checkpoint 4, road checkpoint 8 and road checkpoint 5.

It is determined that the number of historical passes of the target vehicle "浙 111111" from the road checkpoint 2 to the road checkpoint 4 is 15, which is recorded as (浙 111111,2→4:15).

It is determined that the number of historical passes of the target vehicle "浙 111111" from the road checkpoint 2 to the road checkpoint 8 is 6, which is recorded as (浙 111111, 2→8:6).

It is determined that the number of historical passes of the target vehicle "浙 111111" from the road checkpoint 2 to the road checkpoint 5 is 3, which is recorded as (浙 111111, 2→5:3).

The average value 10 of the numbers of historical passes of all of vehicles in the vehicle set S1 from the road checkpoint 2 to the road checkpoint 4 is used as the number of historical passes of the vehicle set S1 from the road checkpoint 2 to the road checkpoint 4, which is recorded as (S1, 2→4: 10).

The average value 8 of the numbers of historical passes of all of vehicles in the vehicle set S1 from the road checkpoint 2 to the road checkpoint 8 is used as the number of historical passes of the vehicle set S1 from the road checkpoint 2 to the road checkpoint 8, which is recorded as (S1, 2→8: 8).

The average value 10 of the numbers of historical passes of all of vehicles in the vehicle set S1 from the road checkpoint 2 to the road checkpoint 5 is used as the number of historical passes of the vehicle set S1 from the road checkpoint 2 to the road checkpoint 5, which is recorded as (S1, 2→5: 10).

The average value 7 of the numbers of historical passes of all of vehicles in the vehicle set S2 from the road checkpoint 2 to the road checkpoint 4 is used as the number of historical passes of the vehicle set S2 from the road checkpoint 2 to the road checkpoint 4, which is recorded as (S2, 2→4: 7).

The average value 9 of the numbers of historical passes of all of vehicles in the vehicle set S2 from the road checkpoint 2 to the road checkpoint 8 is used as the number of historical passes of the vehicle set S2 from the road checkpoint 2 to the road checkpoint 8, which is recorded as (S2, 2→8: 9).

The average value 8 of the numbers of historical passes of all of vehicles in the vehicle set S2 from the road checkpoint 2 to the road checkpoint 5 is used as the number of historical passes of the vehicle set S2 from the road checkpoint 2 to the road checkpoint 5, which is recorded as (S2, 2→5: 8).

The average value 14 of the numbers of historical passes of all of vehicles in the vehicle set S3 from the road checkpoint 2 to the road checkpoint 4 is used as the number of historical passes of the vehicle set S3 from the road checkpoint 2 to the road checkpoint 4, which is recorded as (S3, 2→4: 14).

The average value 9 of the numbers of historical passes of all of vehicles in the vehicle set S3 from the road checkpoint 2 to the road checkpoint 8 is used as the number of historical passes of the vehicle set S3 from the road checkpoint 2 to the road checkpoint 8, which is recorded as (S3, 2→8: 9).

The average value 13 of the numbers of historical passes of all of vehicles in the vehicle set S3 from the road checkpoint 2 to the road checkpoint 5 is used as the number of historical passes of the vehicle set S3 from the road checkpoint 2 to the road checkpoint 5, which is recorded as (S3, 2→5: 13).

The average value 5 of the numbers of historical passes of all of vehicles in the vehicle set S4 from the road checkpoint 2 to the road checkpoint 4 is used as the number of historical passes of the vehicle set S4 from the road checkpoint 2 to the road checkpoint 4, which is recorded as (S4, 2→4: 5).

The average value 5 of the numbers of historical passes of all of vehicles in the vehicle set S4 from the road checkpoint 2 to the road checkpoint 8 is used as the number of historical passes of the vehicle set S4 from the road checkpoint 2 to the road checkpoint 8, which is recorded as (S4, 2→8: 5).

The average value 6 of the numbers of historical passes of all of vehicles in the vehicle set S4 from the road checkpoint 2 to the road checkpoint 5 is used as the number of historical passes of the vehicle set S4 from the road checkpoint 2 to the road checkpoint 5, which is recorded as (S4, 2→5: 6).

At the fourth step, a historical passing probability of the target vehicle from the current road checkpoint to each of adjacent road checkpoints is calculated to obtain a first historical passing probability set, and historical passing probabilities of each vehicle set from the current road checkpoint to all of adjacent road checkpoints are calculated to obtain a second historical passing probability set of this vehicle set.

Specifically, the historical passing probability of the target vehicle "浙 111111" from the road checkpoint 2 to the road checkpoint 4 is 15/(15+6+3)=62.50%, which is recorded as (浙 111111, P(4|2) : 62.50%).

The historical passing probability of the target vehicle "浙 111111" from the road checkpoint 2 to the road checkpoint 8 is 6/(15+6+3)=25.00%, which is recorded as (浙 111111, P(8|2) : 25.00%).

The historical passing probability of the target vehicle "浙 111111" from the road checkpoint 2 to the road checkpoint 5 is 3/(15+6+3)=12.50%, which is recorded as (浙 111111, P(5|2) : 12.50%).

Thus, the first historical passing probability set of the target vehicle "浙 111111" is {62.50%, 25.00%, 12.50%}.

The historical passing probability of the vehicle set S1 from the road checkpoint 2 to the road checkpoint 4 is 10/(10+8+10)=35.71%, which is recorded as ($S_1$, P(4|2) : 35.71%).

The historical passing probability of the vehicle set S1 from the road checkpoint 2 to the road checkpoint 8 is 8/(10+8+10)=28.58%, which is recorded as ($S_1$, P(8|2) : 28.58%).

The historical passing probability of the vehicle set S1 from the road checkpoint 2 to the road checkpoint 5 is 10/(10+8+10)=35.71%, which is recorded as ($S_1$, P(5|2) : 35.71%).

Then, the second historical passing probability set of the vehicle set S1 is {35.71%, 28.58%, 35.71%}.

The historical passing probability of the vehicle set S2 from the road checkpoint 2 to the road checkpoint 4 is 7/(7+9+8)=29.17%, which is recorded as ($S_2$, P(4|2) : 29.17%).

The historical passing probability of the vehicle set S2 from the road checkpoint 2 to the road checkpoint 8 is 9/(7+9+8)=37.50%, which is recorded as ($S_2$, P(8|2) : 37.50%).

The historical passing probability of the vehicle set S2 from the road checkpoint 2 to the road checkpoint 5 is 8/(7+9+8)=33.33%, which is recorded as ($S_2$, P(5|2) : 33.33%).

Then, the second historical passing probability set of the vehicle set S2 is {29.17%, 37.50%, 33.33%}.

The historical passing probability of the vehicle set S3 from the road checkpoint 2 to the road checkpoint 4 is 14/(14+9+13)=38.89%, which is recorded as ($S_3$, P(4|2) : 38.89%).

The historical passing probability of the vehicle set S3 from the road checkpoint 2 to the road checkpoint 8 is 9/(14+9+13)=25%, which is recorded as ($S_3$, P(8|2) : 25.00%).

The historical passing probability of the vehicle set S3 from the road checkpoint 2 to the road checkpoint 5 is 13/(14+9+13)=36.11%, which is recorded as ($S_3$, P(5|2) : 36.11%).

Then, the second historical passing probability set of the vehicle set S3 is {38.89%, 25.00%, 36.11%}.

The historical passing probability of the vehicle set S4 from the road checkpoint 2 to the road checkpoint 4 is 5/(5+5+6)=31.25%, which is recorded as ($S_4$, P(4|2) : 31.25%).

The historical passing probability of the vehicle set S4 from the road checkpoint 2 to the road checkpoint 8 is 5/(5+5+6)=31.25%, which is recorded as ($S_4$, P(8|2) : 31.25%).

The historical passing probability of the vehicle set S4 from the road checkpoint 2 to the road checkpoint 5 is 6/(5+5+6)=37.50%, which is recorded as ($S_4$, P(5|2) : 37.50%).

Then, the second historical passing probability set of the vehicle set S4 is {31.25%, 31.25%, 37.50%}.

At the fifth step, a passing probability of the target vehicle from the current road checkpoint to each of adjacent road checkpoints according to a preset weight value.

Specifically, the preset weight of the target vehicle is 15, the weight of the vehicle set S1 is 10, the weight of the vehicle set S2 is 7, the weight of the vehicle set S3 is 14, and the weight of the vehicle set S4 is 5.

The passing probability of the target vehicle "浙 111111" from the road checkpoint 2 to the road checkpoint 4 is:

$$\frac{62.50\% \times 15 + 35.71\% \times 10 + 29.17\% \times 7 + 38.89\% \times 14 + 31.25\% \times 5}{15 + 10 + 7 + 14 + 5} = 43.13\%$$

which is recorded as (浙 111111, P(4|2) : 43.13%);

The passing probability of the target vehicle "浙 111111" from the road checkpoint 2 to the road checkpoint 8 is:

$$\frac{25.00\% \times 15 + 28.58\% \times 10 + 37.50\% \times 7 + 25.00\% \times 14 + 31.25\% \times 5}{15 + 10 + 7 + 14 + 5} = 28.03\%$$

which is recorded as (浙 111111, P(8|2) : 28.03%);

The passing probability of the target vehicle "浙 111111" from the road checkpoint 2 to the road checkpoint 5 is:

$$\frac{12.50\% \times 15 + 35.71\% \times 10 + 33.33\% \times 7 + 36.11\% \times 14 + 37.50\% \times 5}{15 + 10 + 7 + 14 + 5} = 28.84\%$$

which is recorded as (浙 111111, P(5|2) : 28.84%);

At the sixth step, an adjacent road checkpoint corresponding to the maximum passing probability is determined as a target road checkpoint where the target vehicle appears after passing the current road checkpoint.

Specifically, since 43.13% > 28.84% > 28.03%, the maximum passing probability 43.13% corresponds to the road checkpoint 4, and thus the target road checkpoint where the target vehicle "浙 111111" appears after passing the current road checkpoint 2 is predicted as the road checkpoint 4.

At the seventh step, a predicted time at which the target vehicle appears at the target road checkpoint is determined.

Specifically, it is known that the passing time of the target vehicle passing the road checkpoint 2 is "2016-02-10 16:25:49", and the speed of the target vehicle passing the road checkpoint 2 is 20 km/h, and the distance between the road checkpoint 2 and the road checkpoint 4 is 2 km. (2 km) / (20 km/h) = 0.1 hour = 6 minutes. It can be known that the predicted time at which the target vehicle appears at the road checkpoint 4 is "2016- 02-10 16:31:49".

At the eighth step, a driving track of the target vehicle is predicted according to the destination time of the target vehicle.

Specifically, it is known that the destination time is "2016-02-10 16:51:00".

As shown in FIG. 6, FIG. 6 is a schematic diagram of the driving track of a target vehicle according to the embodiment of the present application. In Fig. 6, each ellipse represents a road checkpoint, and the number in the ellipse is the serial number of the road checkpoint. Bold lines with arrow are connected together as the driving track of the target vehicle.

Specifically, firstly, according to the method for determining the road checkpoint 4 as the target road checkpoint, the target road checkpoint where the target vehicle appears after passing the road checkpoint 4 is predicted as the road checkpoint 11, and the predicted time at which the target vehicle appears at the road checkpoint 11 has not reached the destination time.

Next, according to the method for determining the road checkpoint 4 as the target road checkpoint, the target road checkpoint where the target vehicle appears after passing the road checkpoint 11 is predicted as the road checkpoint 21, and the predicted time at which the target vehicle appears at the road checkpoint 21 has reached the destination time.

Therefore, the road checkpoint 21 can be determined as the destination road checkpoint, and the driving track of the target vehicle can be predicted according to the road checkpoint 4, the road checkpoint 11 and the road checkpoint 21. The finally predicted driving track of the target vehicle is shown by the bold lines in Fig. 6.

It can be seen that the embodiment of the present application can obtain the static attribute information and the number of historical passes of the target vehicle from the passing vehicle record information of the road checkpoint, and further predict the target road checkpoint of the target vehicle and the time at which the target vehicle appears at the target road checkpoint and the driving track of the target vehicle according to the static attribute information and the number of historical passes of the target vehicle.

Corresponding to the method embodiment for predicting a location where a vehicle appears, an embodiment of the present application further discloses an apparatus for predicting a location where a vehicle appears. Referring to FIG. 7, FIG. 7 is a structural diagram of the apparatus for predicting a location where a vehicle appears according to the embodiment of the present application. The apparatus includes:

a first obtaining unit 701, configured for obtaining at least one type of target static attribute information of a target vehicle to be predicted;

a first determination unit 702, configured for determining, according to passing vehicle record information of a current road checkpoint, at least one vehicle set corresponding to the at least one type of target static attribute information within a preset historical time period, wherein one type of target static attribute information corresponds to one vehicle set;

a second determination unit 703, configured for determining a first set of numbers of historical passes of the target vehicle, and determining a second set of numbers of historical passes of each vehicle set, wherein the first set of numbers of historical passes comprises the number of historical passes of the target vehicle from the current road checkpoint to each of adjacent road checkpoints, and the second set of numbers of historical passes of one vehicle set comprises the number of historical passes of a vehicle in this vehicle set from the current road checkpoint to each of adjacent road checkpoints, and the adjacent road checkpoints are road checkpoints adjacent to the current road checkpoint;

a third determination unit 704, configured for determining a passing probability set of the target vehicle from the current road checkpoint to all of adjacent road checkpoints according to the first set of numbers of historical passes and the second set of numbers of historical passes of each vehicle set;

a fourth determination unit 705, configured for determining an adjacent road checkpoint corresponding to the maximum passing probability in the passing probability set as a target road checkpoint where the target vehicle appears after passing the current road checkpoint.

Optionally, the third determination unit 704 includes: a first calculation subunit, a second calculation subunit, and a third calculation subunit.

The first calculation subunit is configured for calculating a historical passing probability of the target vehicle from the current road checkpoint to each of adjacent road checkpoints according to the first set of numbers of historical passes, to obtain the first historical passing probability set.

The second calculation subunit is configured for calculating, according to the second set of numbers of historical passes of each vehicle set, a historical passing probability of this vehicle set from the current road checkpoint to each of adjacent road checkpoints, to obtain the second historical passing probability set of this vehicle set.

The third calculation subunit is configured for determining the passing probability set of the target vehicle from the current road checkpoint to all of the adjacent road checkpoints according to the first historical passing probability set and the second historical passing probability set of each vehicle set.

Optionally, the third calculation subunit is specifically configured for determining the passing probability set of the target vehicle from the current road checkpoint to all of the adjacent road checkpoints according to the first historical passing probability set and the second historical passing probability set of each vehicle set using the following formula,

$$P_j = \frac{S_0^j \times B_0 + \sum\limits_{i=1}^{I} S_i^j \times B_i}{\sum\limits_{i=1}^{I} B_i}$$

wherein, $j$ is the $j$-th adjacent road checkpoint of the current road checkpoint; $i$ is the $i$-th vehicle set in the at least one vehicle set; $I$ is the number of the at least one vehicle set; $P_j$ is a passing probability of the target vehicle from the current road checkpoint to the $j$-th adjacent road checkpoint in the passing probability set of the target vehicle from the current road checkpoint to all of the adjacent road checkpoints; $S_0^j$ is a historical passing probability of the target vehicle from the current road checkpoint to the $j$-th adjacent road checkpoint in the first historical passing probability set; $S_i^j$ is a historical passing probability of the $i$-th vehicle set from the current road checkpoint to the $j$-th adjacent road checkpoint in the second historical passing probability set of the $i$-th vehicle set; $B_0$ is a preset weight of the target vehicle; and $B_i$ is a preset weight of the $i$-th vehicle set.

Optionally, the third calculation subunit is specifically configured for determining the passing probability set of the target vehicle from the current road checkpoint to all of the adjacent road checkpoints according to the first historical passing probability set and the second historical passing probability set of each vehicle set using the following formula,

$$P_j = \frac{\sum\limits_{i=0}^{I} (S_i^j \times B_i)}{\sum\limits_{i=0}^{I} B_i}$$

wherein, $I$ is the sum of the number of the at least one vehicle set and the number of the target vehicle; $j$ is the $j$-th adjacent road checkpoint of the current road checkpoint; $P_j$ is a passing probability of the target vehicle from the current road checkpoint to the $j$-th adjacent road checkpoint in the passing probability set of the target vehicle from the current road checkpoint to all of the adjacent road checkpoints; when $i=0$, $i$ is the target vehicle, $S_i$ is a historical passing probability of the target vehicle from the current road checkpoint to the $j$-th adjacent road checkpoint in the first historical passing probability set, and $B_i$ is a preset weight of the target vehicle; when $i \neq 0$, $i$ is the $i$-th vehicle set in the at least one vehicle set, $S_i$ is a historical passing probability of the $i$-th vehicle set from the current road checkpoint to the $j$-th adjacent road checkpoint in the second historical passing probability set of the $i$-th vehicle set, and $B_i$ is a preset weight of the $i$-th vehicle set.

Optionally, the second determination unit 703 is specifically configured for determining, for each vehicle set, a second set of numbers of historical passes of this vehicle set, and includes: a first determination subunit, an averaging subunit, and a second determination subunit.

The first determination subunit is configured for determining the numbers of historical passes of all of vehicles in this vehicle set from the current road checkpoint to all of the adjacent road checkpoints.

The averaging subunit is configured for, for each of the adjacent road checkpoints, averaging the numbers of historical passes of all of the vehicles in this vehicle set from the current road checkpoint to this adjacent road checkpoint, to obtain an average value corresponding to this adjacent road checkpoint.

The second determination subunit is configured for determining a set consisting of average values corresponding to all of the adjacent road checkpoints as the second set of numbers of historical passes of this vehicle set from the current road checkpoint to all of the adjacent road checkpoints.

Optionally, the apparatus further includes:

a prediction unit, configured for, after the fourth determination unit determines an adjacent road checkpoint corresponding to the maximum passing probability in the passing probability set as a target road checkpoint where the target vehicle appears after passing the current road checkpoint, predicting a time duration required by the target vehicle from the current road checkpoint to the target road checkpoint according to a preset distance between the current road checkpoint and the target road checkpoint and a passing speed of the target vehicle passing the current road checkpoint; and

a fifth determination unit, configured for determining a time obtained by adding the time duration to the passing time of the target vehicle passing the current road checkpoint as a predicted time at which the target vehicle appears at the target road checkpoint, wherein the passing time of the target vehicle is obtained from the passing vehicle record information of the current road checkpoint.

Optionally, the apparatus further includes:

a second obtaining unit, configured for obtaining a historical passing time of the target vehicle passing the current road checkpoint from the passing vehicle record information of the current road checkpoint;

a sixth determination unit, configured for determining, from the passing vehicle record information of the target road checkpoint, a historical passing time of the target vehicle passing the target road checkpoint corresponding to the historical passing time of the current road checkpoint; and determining a time difference between the historical passing time of the current road checkpoint and the historical passing time of the target road checkpoint corresponding to the historical passing time of the current road checkpoint;

a calculation unit, configured for performing an average calculation on the time difference determined, and determining an average value of the time difference as a historical time duration between the current road checkpoint and the target road checkpoint; and

a first generation unit, configured for determining a time obtained by adding the historical time duration to the passing time of the target vehicle passing the current road checkpoint as the predicted time at which the target vehicle appears at the target road checkpoint.

Optionally, the apparatus further includes:

a determination unit, configured for, after determining the predicted time at which the target vehicle appears at the target road checkpoint, determining whether the predicted time is a preset destination time;

a sending unit, configured for, if the predicted time is not the preset destination time, putting the target road checkpoint into a track set corresponding to the target vehicle as an intermediate road checkpoint, and sending the track set corresponding to the target vehicle to the target road checkpoint, wherein a predicted road checkpoint where the target vehicle will appear after passing each road checkpoint is recorded in the track set corresponding to the target vehicle; and

a second generation unit, configured for, if the predicted time is the preset destination time, putting the target road checkpoint into the track set corresponding to the target vehicle as a destination road checkpoint, and generating a predicted driving track of the target vehicle according to all of road checkpoints in the track set corresponding to the target vehicle.

It can be seen that the embodiment of the present application can combine the static attribute information with the number of historical passes of the target vehicle to predict the target road checkpoint where the target vehicle appears after passing the current road checkpoint. That is, the effective information related to the target vehicle is added when predicting the location where the target vehicle appears. In this way, the accuracy of predicting the target road checkpoint where the target vehicle appears increases.

Corresponding to the method embodiment for predicting a location where a vehicle appears, an embodiment of the present application further discloses an electronic device including a processor and a memory, wherein the memory is configured for storing a computer program, and the processor is configured for executing the computer program stored in the memory to implement the method for predicting a location where a vehicle appears. The method for predicting a location where a vehicle appear includes:

obtaining at least one type of target static attribute information of a target vehicle to be predicted;

determining, according to passing vehicle record information of a current road checkpoint, at least one vehicle set corresponding to the at least one type of target static attribute information within a preset historical time period, wherein one type of target static attribute information corresponds to one vehicle set;

determining a first set of numbers of historical passes of the target vehicle, and determining a second set of numbers of historical passes of each vehicle set, wherein the first set of numbers of historical passes comprises the number of historical passes of the target vehicle from the current road checkpoint to each of adjacent road checkpoints, and the second set of numbers of historical passes of one vehicle set comprises the number of historical passes of a vehicle in this vehicle set from the current road checkpoint to each of adjacent road checkpoints, and the adjacent road checkpoints are road checkpoints adjacent to the current road checkpoint;

determining a passing probability set of the target vehicle from the current road checkpoint to all of adjacent road checkpoints according to the first set of numbers of historical passes and the second set of numbers of historical passes of each vehicle set;

determining an adjacent road checkpoint corresponding to the maximum passing probability in the passing probability set as a target road checkpoint where the target vehicle appears after passing the current road checkpoint.

It can be seen that the embodiment of the present application can combine the static attribute information with the number of historical passes of the target vehicle to predict the target road checkpoint where the target vehicle appears after passing the current road checkpoint. That is, the effective information related to the target vehicle is added in predicting the location where the target vehicle appears. In this way, the accuracy of predicting the target road checkpoint where the target vehicle appears increases.

In the embodiment of the present application, the electronic device may further include a communication interface and a communication bus, wherein the processor, the communication interface, and the memory communicate with each other through the communication bus.

The communication bus may be a PCI (Peripheral Component Interconnect) bus or an EISA (Extended Industry Standard Architecture) bus, or the like. The communication bus may be divided into an address bus, a data bus, a control bus, or the like.

The communication interface is configured for communicating the above electronic device with other devices.

The memory may include a RAM (Random Access Memory), and may also include a NVM (Non-Volatile Memory), such as at least one disk storage. Optionally, the memory may also be at least one storage device located away from the above processor.

The processor may be a general-purpose processor, including a CPU (Central Processing Unit), an NP (Network Processor), or the like; or may be a DSP (Digital Signal Processing) or an ASIC (Application Specific Integrated Circuit), an FPGA (Field-Programmable Gate Array) or other programmable logic devices, discrete gates or transistor logic devices, discrete hardware components.

Corresponding to the method embodiment for predicting a location where a vehicle appears, an embodiment of the present application further discloses a machine readable storage medium storing a computer program, wherein the computer program is configured for implementing the method for predicting a location where a vehicle appears when being executed by a processor. The method for predicting a location where a vehicle appear includes:

obtaining at least one type of target static attribute information of a target vehicle to be predicted;

determining, according to passing vehicle record information of a current road checkpoint, at least one vehicle set corresponding to the at least one type of target static attribute information within a preset historical time period, wherein one type of target static attribute information corresponds to one vehicle set;

determining a first set of numbers of historical passes of the target vehicle, and determining a second set of numbers of historical passes of each vehicle set, wherein the first set of numbers of historical passes comprises the number of historical passes of the target vehicle from the current road checkpoint to each of adjacent road checkpoints, and the second set of numbers of historical passes of one vehicle set comprises the number of historical passes of a vehicle in this vehicle set from the current road checkpoint to each of adjacent road checkpoints, and the adjacent road checkpoints are road checkpoints adjacent to the current road checkpoint;

determining a passing probability set of the target vehicle from the current road checkpoint to all of adjacent road checkpoints according to the first set of numbers of historical passes and the second set of numbers of historical passes of each vehicle set; and

determining an adjacent road checkpoint corresponding to the maximum passing probability in the passing probability set as a target road checkpoint where the target vehicle appears after passing the current road checkpoint.

It can be seen that the embodiment of the present application can combine the static attribute information with the number of historical passes of the target vehicle to predict the target road checkpoint where the target vehicle appears after passing the current road checkpoint. That is, the effective information related to the target vehicle is added in predicting the location where the target vehicle appears. In this way, the accuracy of predicting the target road checkpoint where the target vehicle appears increases.

Corresponding to the method embodiment for predicting a location where a vehicle appears, an embodiment of the present application further discloses a computer program, which is configured for implementing the method for predicting a location where a vehicle appears when being executed by a processor. The method for predicting a location where a vehicle appear includes:

obtaining at least one type of target static attribute information of a target vehicle to be predicted;

determining, according to passing vehicle record information of a current road checkpoint, at least one vehicle set corresponding to the at least one type of target static attribute information within a preset historical time period, wherein one type of target static attribute information corresponds to one vehicle set;

determining a first set of numbers of historical passes of the target vehicle, and determining a second set of numbers of historical passes of each vehicle set, wherein the first set of numbers of historical passes comprises the number of historical passes of the target vehicle from the current road checkpoint to each of adjacent road checkpoints, and the second set of numbers of historical passes of one vehicle set comprises the number of historical passes of a vehicle in this vehicle set from the current road checkpoint to each of adjacent road checkpoints, and the adjacent road checkpoints are road checkpoints adjacent to the current road checkpoint;

determining a passing probability set of the target vehicle from the current road checkpoint to all of the adjacent road checkpoints according to the first set of numbers of historical passes and the second set of numbers of historical passes of each vehicle set;

determining an adjacent road checkpoint corresponding to the maximum passing probability in the passing probability set as a target road checkpoint where the target vehicle appears after passing the current road checkpoint.

It can be seen that the embodiment of the present application can combine the static attribute information with the number of historical passes of the target vehicle to predict the target road checkpoint where the target vehicle appears after passing the current road checkpoint. That is, the effective information related to the target vehicle is added in predicting the location where the target vehicle appears. In this way, the accuracy of predicting the target road checkpoint where the target vehicle appears increases.

It should be noted that the relationship terms use here, such as "first," "second," and the like are only used to distinguish one entity or operation from another entity or operation, but do not necessarily require or imply that there is actual relationship or order between these entities or operations. Moreover, the terms "include," "comprise," or any variants thereof are intended to cover a non-exclusive inclusion, such that processes, methods, articles, or devices, including a series of elements, include not only those elements that have been listed, but also other elements that have not specifically been listed or the elements intrinsic to these processes, methods, articles, or devices. Without further limitations, elements limited by the wording "comprise(s) a/an..." and "include(s) a/an" do not exclude additional identical elements in the processes, methods, articles, or devices, including the listed elements.

All of the embodiments in the description are described in a correlated manner, and identical or similar parts in various embodiments can refer to one another. In addition, the description for each embodiment focuses on the differences from other embodiments. In particular, the embodiments of the apparatus for predicting a location where a vehicle appears, electronic device, machine readable storage medium and computer program are described briefly, since they are substantially similar to the method embodiment for predicting a location where a vehicle appears, and the related contents can refer to the description of the method embodiment for predicting a location where a vehicle appears.

The embodiments described above are simply preferable embodiments of the present application, and are not intended to limit the scope of protection of the present application. Any modifications, alternatives, improvements, or the like within the spirit and principle of the present application shall be included within the scope of protection of the present application.

**EP 3 605 490 A1**

**Claims**

1. A method for predicting a location where a vehicle appears, comprising:

    obtaining at least one type of target static attribute information of a target vehicle to be predicted;
    determining, according to passing vehicle record information of a current road checkpoint, at least one vehicle set corresponding to the at least one type of target static attribute information within a preset historical time period, wherein one type of target static attribute information corresponds to one vehicle set;
    determining a first set of numbers of historical passes of the target vehicle, and determining a second set of numbers of historical passes of each vehicle set, wherein the first set of numbers of historical passes comprises the number of historical passes of the target vehicle from the current road checkpoint to each of adjacent road checkpoints, and the second set of numbers of historical passes of one vehicle set comprises the number of historical passes of a vehicle in this vehicle set from the current road checkpoint to each of adjacent road checkpoints, and the adjacent road checkpoints are road checkpoints adjacent to the current road checkpoint;
    determining a passing probability set of the target vehicle from the current road checkpoint to all of the adjacent road checkpoints according to the first set of numbers of historical passes and the second set of numbers of historical passes of each vehicle set;
    determining an adjacent road checkpoint corresponding to the maximum passing probability in the passing probability set as a target road checkpoint where the target vehicle appears after passing the current road checkpoint.

2. The method of claim 1, wherein determining a passing probability set of the target vehicle from the current road checkpoint to all of the adjacent road checkpoints according to the first set of numbers of historical passes and the second set of numbers of historical passes of each vehicle set comprises:

    calculating a historical passing probability of the target vehicle from the current road checkpoint to each of adjacent road checkpoints according to the first set of numbers of historical passes, to obtain the first historical passing probability set;
    calculating, according to the second set of numbers of historical passes of each vehicle set, a historical passing probability of this vehicle set from the current road checkpoint to each of adjacent road checkpoints, to obtain the second historical passing probability set of this vehicle set;
    determining the passing probability set of the target vehicle from the current road checkpoint to all of the adjacent road checkpoints according to the first historical passing probability set and the second historical passing probability set of each vehicle set.

3. The method of claim 2, wherein determining a passing probability set of the target vehicle from the current road checkpoint to all of the adjacent road checkpoints according to the first historical passing probability set and the second historical passing probability set of each vehicle set comprises:
    determining the passing probability set of the target vehicle from the current road checkpoint to all of the adjacent road checkpoints according to the first historical passing probability set and the second historical passing probability set of each vehicle set using the following formula:

$$ \mathrm{P}_j = \frac{S_0^j \times B_0 + \sum_{i=1}^{I} S_i^j \times B_i}{\sum_{i=1}^{I} B_i} $$

wherein, $j$ is the $j$-th adjacent road checkpoint of the current road checkpoint; $i$ is the $i$-th vehicle set in the at least one vehicle set; I is the number of the at least one vehicle set; $P_j$ is a passing probability of the target vehicle from the current road checkpoint to the $j$-th adjacent road checkpoint in the passing probability set of the target vehicle from the current road checkpoint to all of the adjacent road checkpoints; $S_0^j$ is a historical passing probability of the target vehicle from the current road checkpoint to the j-th adjacent road checkpoint in the first historical passing

24

probability set; $S_i^j$ is a historical passing probability of the $i$-th vehicle set from the current road checkpoint to the $j$-th adjacent road checkpoint in the second historical passing probability set of the $i$-th vehicle set; $B_0$ is a preset weight of the target vehicle; and $B_i$ is a preset weight of the $i$-th vehicle set.

4. The method of claim 2, wherein determining a passing probability set of the target vehicle from the current road checkpoint to all of the adjacent road checkpoints according to the first historical passing probability set and the second historical passing probability set of each vehicle set comprises:
determining the passing probability set of the target vehicle from the current road checkpoint to all of the adjacent road checkpoints according to the first historical passing probability set and the second historical passing probability set of each vehicle set using the following formula:

$$ P_j = \frac{\sum_{i=0}^{I}(S_i^j \times B_i)}{\sum_{i=0}^{I} B_i} $$

wherein, I is the sum of the number of the at least one vehicle set and the number of the target vehicle; $j$ is the $j$-th adjacent road checkpoint of the current road checkpoint; $P_j$ is a passing probability of the target vehicle from the current road checkpoint to the $j$-th adjacent road checkpoint in the passing probability set of the target vehicle from the current road checkpoint to all of the adjacent road checkpoints; when $i=0$, $i$ is the target vehicle, $S_i$ is a historical passing probability of the target vehicle from the current road checkpoint to the $j$-th adjacent road checkpoint in the first historical passing probability set, and $B_i$ is a preset weight of the target vehicle; when $i\neq0$, $i$ is the $i$-th vehicle set in the at least one vehicle set, $S_i$ is a historical passing probability of the $i$-th vehicle set from the current road checkpoint to the $j$-th adjacent road checkpoint in the second historical passing probability set of the $i$-th vehicle set, and $B_i$ is a preset weight of the $i$-th vehicle set.

5. The method of claim 1, wherein determining a second set of numbers of historical passes of each vehicle set comprises:
determining, for each vehicle set, the second set of numbers of historical passes of this vehicle set as follows:

    determining the numbers of historical passes of all of vehicles in this vehicle set from the current road checkpoint to all of the adjacent road checkpoints;
    for each of the adjacent road checkpoints, averaging the numbers of historical passes of all of the vehicles in this vehicle set from the current road checkpoint to this adjacent road checkpoint, to obtain an average value corresponding to this adjacent road checkpoint; and
    determining a set consisting of average values corresponding to all of the adjacent road checkpoints as the second set of numbers of historical passes of this vehicle set from the current road checkpoint to all of the adjacent road checkpoints.

6. The method of claim 1, wherein the method further comprises:

    after determining an adjacent road checkpoint corresponding to the maximum passing probability in the passing probability set as a target road checkpoint where the target vehicle appears after passing the current road checkpoint, predicting a time duration required by the target vehicle from the current road checkpoint to the target road checkpoint according to a preset distance between the current road checkpoint and the target road checkpoint and a passing speed of the target vehicle passing the current road checkpoint; and
    determining a time obtained by adding the time duration to the passing time of the target vehicle passing the current road checkpoint as a predicted time at which the target vehicle appears at the target road checkpoint, wherein the passing time of the target vehicle is obtained from the passing vehicle record information of the current road checkpoint.

7. The method of claim 1, wherein the method further comprises:

obtaining a historical passing time of the target vehicle passing the current road checkpoint from the passing vehicle record information of the current road checkpoint;

obtaining, from the passing vehicle record information of the target road checkpoint, a historical passing time of the target vehicle passing the target road checkpoint corresponding to the historical passing time of the current road checkpoint;

determining a time difference between the historical passing time of the current road checkpoint and the historical passing time of the target road checkpoint corresponding to the historical passing time of the current road checkpoint;

performing an average calculation on the time difference determined, and determining an average value of the time difference as a historical time duration between the current road checkpoint and the target road checkpoint; and

determining a time obtained by adding the historical time duration to the passing time of the target vehicle passing the current road checkpoint as the predicted time at which the target vehicle appears at the target road checkpoint.

8. The method of claim 6 or 7, wherein the method further comprises:

after determining the predicted time at which the target vehicle appears at the target road checkpoint, determining whether the predicted time is a preset destination time;

if not, putting the target road checkpoint into a track set corresponding to the target vehicle as an intermediate road checkpoint, and sending the track set corresponding to the target vehicle to the target road checkpoint, wherein a predicted road checkpoint where the target vehicle will appear after passing each road checkpoint is recorded in the track set corresponding to the target vehicle; and

if yes, putting the target road checkpoint into the track set corresponding to the target vehicle as a destination road checkpoint, and generating a predicted driving track of the target vehicle according to all of road checkpoints in the track set corresponding to the target vehicle.

9. An apparatus for predicting a location where a vehicle appears, comprising:

a first obtaining unit, configured for obtaining at least one type of target static attribute information of a target vehicle to be predicted;

a first determination unit, configured for determining, according to passing vehicle record information of a current road checkpoint, at least one vehicle set corresponding to the at least one type of target static attribute information within a preset historical time period, wherein one type of target static attribute information corresponds to one vehicle set;

a second determination unit, configured for determining a first set of numbers of historical passes of the target vehicle, and determining a second set of numbers of historical passes of each vehicle set, wherein the first set of numbers of historical passes comprises the number of historical passes of the target vehicle from the current road checkpoint to each of adjacent road checkpoints, and the second set of numbers of historical passes of one vehicle set comprises the number of historical passes of a vehicle in this vehicle set from the current road checkpoint to each of adjacent road checkpoints, and the adjacent road checkpoints are road checkpoints adjacent to the current road checkpoint;

a third determination unit, configured for determining a passing probability set of the target vehicle from the current road checkpoint to all of the adjacent road checkpoints according to the first set of numbers of historical passes and the second set of numbers of historical passes of each vehicle set; and

a fourth determination unit, configured for determining an adjacent road checkpoint corresponding to the maximum passing probability in the passing probability set as a target road checkpoint where the target vehicle appears after passing the current road checkpoint.

10. The apparatus of claim 9, wherein the third determination unit comprises a first calculation subunit, a second calculation subunit, and a third calculation subunit, wherein

the first calculation subunit is configured for calculating a historical passing probability of the target vehicle from the current road checkpoint to each of adjacent road checkpoints according to the first set of numbers of historical passes, to obtain the first historical passing probability set; and

the second calculation subunit is configured for calculating, according to the second set of numbers of historical passes of each vehicle set, a historical passing probability of this vehicle set from the current road checkpoint to each of adjacent road checkpoints, to obtain the second historical passing probability set of this vehicle set; and

the third calculation subunit is configured for determining the passing probability set of the target vehicle from the current road checkpoint to all of the adjacent road checkpoints according to the first historical passing probability set and the second historical passing probability set of each vehicle set.

11. The apparatus of claim 10, wherein the third calculation subunit is further configured for determining the passing probability set of the target vehicle from the current road checkpoint to all of the adjacent road checkpoints according to the first historical passing probability set and the second historical passing probability set of each vehicle set using the following formula:

$$P_j = \frac{S_0^j \times B_0 + \sum_{i=1}^{I} S_i^j \times B_i}{\sum_{i=1}^{I} B_i}$$

wherein, $j$ is the $j$-th adjacent road checkpoint of the current road checkpoint; $i$ is the $i$-th vehicle set in the at least one vehicle set; $I$ is the number of the at least one vehicle set; $P_j$ is a passing probability of the target vehicle from the current road checkpoint to the $j$-th adjacent road checkpoint in the passing probability set of the target vehicle from the current road checkpoint to all of the adjacent road checkpoints; $S_0^j$ is a historical passing probability of the target vehicle from the current road checkpoint to the $j$-th adjacent road checkpoint in the first historical passing probability set; $S_i^j$ is a historical passing probability of the $i$-th vehicle set from the current road checkpoint to the $j$-th adjacent road checkpoint in the second historical passing probability set of the $i$-th vehicle set; $B_0$ is a preset weight of the target vehicle; and $B_i$ is a preset weight of the $i$-th vehicle set.

12. The apparatus of claim 10, wherein the third calculation subunit is further configured for determining the passing probability set of the target vehicle from the current road checkpoint to all of the adjacent road checkpoints according to the first historical passing probability set and the second historical passing probability set of each vehicle set using the following formula:

$$P_j = \frac{\sum_{i=0}^{I} (S_i^j \times B_i)}{\sum_{i=0}^{I} B_i}$$

wherein, $I$ is the sum of the number of the at least one vehicle set and the number of the target vehicle; $j$ is the $j$-th adjacent road checkpoint of the current road checkpoint; $P_j$ is a passing probability of the target vehicle from the current road checkpoint to the $j$-th adjacent road checkpoint in the passing probability set of the target vehicle from the current road checkpoint to all of the adjacent road checkpoints; when $i=0$, $i$ is the target vehicle, $S_i$ is a historical passing probability of the target vehicle from the current road checkpoint to the $j$-th adjacent road checkpoint in the first historical passing probability set, and $B_i$ is a preset weight of the target vehicle; when $i \neq 0$, $i$ is the $i$-th vehicle set in the at least one vehicle set, $S_i$ is a historical passing probability of the $i$-th vehicle set from the current road checkpoint to the $j$-th adjacent road checkpoint in the second historical passing probability set of the $i$-th vehicle set, and $B_i$ is a preset weight of the $i$-th vehicle set.

13. The apparatus of claim 9, wherein the second determination unit is further configured for determining, for each vehicle set, a second set of numbers of historical passes of this vehicle set, and comprises: a first determination subunit, an averaging subunit, and a second determination subunit, wherein
the first determination subunit is configured for determining the numbers of historical passes of all of vehicles in this vehicle set from the current road checkpoint to all of the adjacent road checkpoints;

the averaging subunit is configured for, for each of the adjacent road checkpoints, averaging the numbers of historical passes of all of the vehicles in this vehicle set from the current road checkpoint to this adjacent road checkpoint, to obtain an average value corresponding to this adjacent road checkpoint; and

the second determination subunit is configured for determining a set consisting of average values corresponding to all of the adjacent road checkpoints as the second set of numbers of historical passes of this vehicle set from the current road checkpoint to all of the adjacent road checkpoints.

14. The apparatus of claim 9, wherein the apparatus further comprises:

a prediction unit, configured for, after the fourth determination unit determines an adjacent road checkpoint corresponding to the maximum passing probability in the passing probability set as a target road checkpoint where the target vehicle appears after passing the current road checkpoint, predicting a time duration required by the target vehicle from the current road checkpoint to the target road checkpoint according to a preset distance between the current road checkpoint and the target road checkpoint and a passing speed of the target vehicle passing the current road checkpoint; and

a fifth determination unit, configured for determining a time obtained by adding the time duration to the passing time of the target vehicle passing the current road checkpoint as a predicted time at which the target vehicle appears at the target road checkpoint, wherein the passing time of the target vehicle is obtained from the passing vehicle record information of the current road checkpoint.

15. The apparatus of claim 9, wherein the apparatus further comprises:

a second obtaining unit, configured for obtaining a historical passing time of the target vehicle passing the current road checkpoint from the passing vehicle record information of the current road checkpoint;

a sixth determination unit, configured for determining, from the passing vehicle record information of the target road checkpoint, a historical passing time of the target vehicle passing the target road checkpoint corresponding to the historical passing time of the current road checkpoint; and determining a time difference between the historical passing time of the current road checkpoint and the historical passing time of the target road checkpoint corresponding to the historical passing time of the current road checkpoint;

a calculation unit, configured for performing an average calculation on the time difference determined, and determining an average value of the time difference as a historical time duration between the current road checkpoint and the target road checkpoint; and

a first generation unit, configured for determining a time obtained by adding the historical time duration to the passing time of the target vehicle passing the current road checkpoint as the predicted time at which the target vehicle appears at the target road checkpoint.

16. The apparatus of claim 14 or 15, wherein the apparatus further comprises:

a determination unit, configured for, after determining the predicted time at which the target vehicle appears at the target road checkpoint, determining whether the predicted time is a preset destination time;

a sending unit, configured for, if the predicted time is not the preset destination time, putting the target road checkpoint into a track set corresponding to the target vehicle as an intermediate road checkpoint, and sending the track set corresponding to the target vehicle to the target road checkpoint, wherein a predicted road checkpoint where the target vehicle will appear after passing each road checkpoint is recorded in the track set corresponding to the target vehicle; and

a second generation unit, configured for, if the predicted time is the preset destination time, putting the target road checkpoint into the track set corresponding to the target vehicle as a destination road checkpoint, and generating a predicted driving track of the target vehicle according to all of road checkpoints in the track set corresponding to the target vehicle.

17. An electronic device, comprising a processor and a memory, wherein
the memory is configured for storing a computer program;
the processor is configured for executing the computer program stored in the memory to implement the method of any one of claims 1-8.

18. A machine readable storage medium storing a computer program, wherein the computer program performs the method of any one of claims 1-8 when being executed by a processor.

**19.** A computer program, which performs the method of any one of claims 1-8 when being executed by a processor.

obtaining at least one type of target static attribute information of a target vehicle to be predicted `101`

determining, according to passing vehicle record information of a current road checkpoint, at least one vehicle set corresponding to the at least one type of target static attribute information within a preset historical time period `102`

determining a first historical passing number set for the target vehicle from the current road checkpoint to all of adjacent road checkpoints, and determining a second historical passing number set for each vehicle set from the current road checkpoint to all of adjacent road checkpoints `103`

determining a passing probability set of the target vehicle from the current road checkpoint to all of the adjacent road checkpoints according to the first set of numbers of historical passes and the second set of numbers of historical passes `104`

determining an adjacent road checkpoint corresponding to the maximum passing probability in the passing probability set as a target road checkpoint where the target vehicle appears after passing the current road checkpoint `105`

Fig. 1

calculating a historical passing probability of the target vehicle from the current road checkpoint to each of adjacent road checkpoints according to the first set of numbers of historical passes, to obtain the first historical passing probability set

11

calculating, according to the second set of numbers of historical passes of each vehicle set, a historical passing probability of this vehicle set from the current road checkpoint to each of adjacent road checkpoints, to obtain the second historical passing probability set of this vehicle set

12

calculating the passing probability set of the target vehicle from the current road checkpoint to all of the adjacent road checkpoints according to the first historical passing probability set and the second historical passing probability set

13

Fig. 2

after determining a target road checkpoint where the target vehicle appears after passing the current road checkpoint, predicting a time duration required by the target vehicle from the current road checkpoint to the target road checkpoint according to a preset distance between the current road checkpoint and the target road checkpoint and a passing speed of the target vehicle passing the current road checkpoint

301

determining a time obtained by adding the time duration to the passing time of the target vehicle passing the current road checkpoint as a predicted time at which the target vehicle appears at the target road checkpoint

302

Fig. 3

obtaining a historical passing time of the target vehicle passing the current road checkpoint from the passing vehicle record information of the current road checkpoint  401

determining, from the passing vehicle record information of the target road checkpoint, a historical passing time of the target vehicle passing the target road checkpoint corresponding to the historical passing time of the current road checkpoint; determining a time difference between the historical passing time of the current road checkpoint and the historical passing time of the target road checkpoint  402

performing an average calculation on the time difference, and determining an average value of the time difference as a historical time duration between the current road checkpoint and the target road checkpoint  403

generating the predicted time at which the target vehicle appears at the target road checkpoint by adding the historical time duration to the passing time of the target vehicle passing the current road checkpoint  404

Fig. 4

after determining the predicted time at which the target vehicle appears at the target road bayonet, determining whether the predicted time is a preset destination time  501

No

Yes

putting the target road checkpoint into a track set corresponding to the target vehicle as an intermediate road checkpoint, and sending the track set corresponding to the target vehicle to the target road checkpoint  502

putting the target road checkpoint into the track set corresponding to the target vehicle as a destination road checkpoint, and generating a predicted driving track of the target vehicle according to all of road checkpoints in the track set corresponding to the target vehicle  503

Fig. 5

Fig. 6

first obtaining unit — 701

first determination unit — 702

second determination unit — 703

third determination unit — 704

fourth determination unit — 705

Fig. 7

# INTERNATIONAL SEARCH REPORT

| International application No. |
| --- |
| PCT/CN2018/081365 |

## A. CLASSIFICATION OF SUBJECT MATTER

G08G 1/01 (2006.01) i; G08G 1/017 (2006.01) i

According to International Patent Classification (IPC) or to both national classification and IPC

## B. FIELDS SEARCHED

Minimum documentation searched (classification system followed by classification symbols)

G08G

Documentation searched other than minimum documentation to the extent that such documents are included in the fields searched

Electronic data base consulted during the international search (name of data base and, where practicable, search terms used)

CNABS; CNTXT; CNKI; VEN; EPTXT; USTXT; WOTXT: 预测, 预计, 卡口, 收费站, 出现地点, 轨迹, 终点, 目的地, 记录, 历史, 次数, 统计, 概率, 阈值, 预设, 权重, 速度, 时长, 杭州海康威视数字技术股份有限公司, predict+, forecast, expect+, bayonet, station, trajectory, path, destination, record, statistic?, probability, threshold, weight+, speed

## C. DOCUMENTS CONSIDERED TO BE RELEVANT

| Category* | Citation of document, with indication, where appropriate, of the relevant passages | Relevant to claim No. |
| --- | --- | --- |
| X | CN 103366566 A (INSTITUTE OF INFORMATION ENGINEERING，CHINESE ACADEMY OF SCIENCES), 23 October 2013 (23.10.2013), description, paragraphs [0084]-[0121] | 1, 2, 5, 6, 9, 10, 13, 14, 17-19 |
| A | CN 103325245 A (INSTITUTE OF INFORMATION ENGINEERING，CHINESE ACADEMY OF SCIENCES), 25 September 2013 (25.09.2013), entire document | 1-19 |
| A | JP 2010107305 A (AISIN AW CO.), 13 May 2010 (13.05.2010), entire document | 1-19 |
| A | JP 2007140745 A (SUMITOMO ELECTRIC INDUSTRIES), 07 June 2007 (07.06.2007), entire document | 1-19 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 24 May 2018 | 20 June 2018 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>ZHOU, Yu<br><br>Telephone No. 86-(0512)-88997306 |

Form PCT/ISA/210 (second sheet) (January 2015)

## INTERNATIONAL SEARCH REPORT
### Information on patent family members

International application No.

PCT/CN2018/081365

| Patent Documents referred in the Report | Publication Date | Patent Family | Publication Date |
|---|---|---|---|
| CN 103366566 A | 23 October 2013 | CN 103366566 B | 06 May 2015 |
| CN 103325245 A | 25 September 2013 | CN 103325245 B | 07 January 2015 |
| JP 2010107305 A | 13 May 2010 | None | |
| JP 2007140745 A | 07 June 2007 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710200201X